# EUROPÄISCHE PATENTSCHRIFT

(11) **EP 4 150 419 B1**
(45) Veröffentlichungstag und Bekanntmachung des Hinweises auf die Patenterteilung: **10.09.2025**
(21) Anmeldenummer: 21726078.5
(22) Anmeldetag: 12.05.2021
(51) Int. Cl.: G05B 19/418, G05B 13/02, G06N 3/08

(54) **SYSTEM UND VERFAHREN ZUR STEUERUNG EINER AUS MEHREREN ANLAGENTEILEN BESTEHENDEN PRODUKTIONSANLAGE, INSBESONDERE EINER PRODUKTIONSANLAGE ZUR ERZEUGUNG VON INDUSTRIEGÜTERN WIE METALLISCHEM HALBZEUG**
SYSTEM AND METHOD FOR CONTROLLING A PRODUCTION PLANT CONSISTING OF A PLURALITY OF PLANT PARTS, IN PARTICULAR A PRODUCTION PLANT FOR PRODUCING INDUSTRIAL GOODS SUCH AS METAL SEMI-FINISHED PRODUCTS
SYSTÈME ET PROCÉDÉ DE COMMANDE D'UNE USINE DE PRODUCTION CONSTITUÉE D'UNE PLURALITÉ DE PARTIES D'USINE, EN PARTICULIER D'UNE USINE DE PRODUCTION POUR LA PRODUCTION DE MARCHANDISES INDUSTRIELLES TELLES QUE DES PRODUITS SEMI-FINIS MÉTALLIQUES

(30) Priorität: 14.05.2020 DE 102020206114
(43) Veröffentlichungstag der Anmeldung: 22.03.2023
(73) Patentinhaber: SMS group GmbH, 41069 Mönchengladbach (DE)
(72) Erfinder: KLEIN, Carsten Andreas, 40237 Düsseldorf (DE)
(74) Vertreter: Kross, Ulrich
(86) Internationale Anmeldenummer: PCT/EP2021/062601
(87) Internationale Veröffentlichungsnummer: WO 2021/228927

(56) Entgegenhaltungen:
- EP-A1- 3 474 091
- DE-A1- 19 930 173
- US-A1- 2019 265 686

## Beschreibung

Die Erfindung betrifft ein System und Verfahren zur Steuerung einer aus mehreren Anlagenteilen bestehenden Produktionsanlage, insbesondere einer Produktionsanlage zur Erzeugung von Industriegütern wie metallischem Halbzeug. Die Erfindung betrifft insbesondere Produktionsanlagen zur Herstellung von Brammen, Blechen oder Bändern, Trägern oder Rohren aus Metall sowie deren Vorprodukte oder zur Durchführung einzelner Arbeitsschritte im Rahmen der Herstellung, bei denen eine Produktqualität sichergestellt werden muss.

Traditionell erfolgt die Herstellung von Produkten als Abfolge von Einzelprozessen. Für diese gibt es jeweils einen oder mehrere technologische Parameter, deren Einhaltung eine Erreichung der gewünschten Produkteigenschaften sicherstellen soll. Die Einhaltung der technologischen Stellgrößen soll durch die verschiedenen Steuer- und Regelsysteme, allgemein durch das Automationssystem der Anlage sichergestellt werden.

Die technologischen Sollvorgaben werden zumeist in einer Abfolge von theoretischen Überlegungen, Simulationen, Laborversuchen und schließlich einzelnen Betriebsversuchen festgelegt. Solche Rezepturen sind zumeist statisch und werden während der Produktionsabfolge nicht oder nur in Sonderfällen durch manuelle Eingriffe angepasst.

Aufgrund von nicht eingehaltenen oder schlecht gewählten technologischen Sollvorgaben kommt es innerhalb der industriellen Produktion zu Defekten an Produkten, die zur Folge haben, dass diese nicht für die Aufträge eingesetzt werden können, für die sie ursprünglich geplant waren, schlimmstenfalls sogar gar keiner kommerziellen Nutzung zugeführt werden können.

Eine Auswertung von Produktionsparametern während der Herstellung und/oder erreichten Qualitäten findet typischerweise manuell statt und eine Kopplung zwischen einer Auswertung und technologischen Sollvorgaben erfolgt nicht automatisiert.

Zur Verbesserung der Herstellung von Produkten in einer Produktionsanlage mit mehreren Anlagenteilen schlägt die US 10,365,640 B2 vor, die Zusammenhänge zwischen den einzelnen Anlagenteilen mittels maschinellen Lernens zu bestimmen und auf Basis von erfassten Qualitätsparametern Steuerregeln abzuleiten, welche in die Anlagensteuerung eingreifen. Die Parameter der einzelnen Anlagenteile werden mittels Sensoren erfasst und die Steuerregeln werden über Aktoren in den Anlagenteilen umgesetzt. Es erfolgt somit eine anlagenübergreifende Überwachung mit Regeleingriffen in die Anlagensteuerung. Es wird jedoch nicht generell die Anlagensteuerung optimiert, sondern nur durch Anpassung von Steuerregeln in die Steuerung eingegriffen.

DE 199 30 173 A1 offenbart ein Verfahren zur Einstellung von Prozessparametern für eine vorgegebene Produktqualität.

Der vorliegenden Erfindung liegt ausgehend von diesem Stand der Technik die Aufgabe zugrunde, die Produktion in einer aus mehreren Anlagenteilen bestehenden Produktionsanlage anlagenübergreifend zu optimieren.

Die Aufgabe wird erfindungsgemäß gelöst durch ein System nach Anspruch 1.

Die Produktionsanlage, insbesondere die mehreren Anlagenteile der Produktionsanlage, weisen jeweils eine separate Anlagenautomation auf zur Überwachung und Steuerung und/oder Regelung des Produktionsprozesses innerhalb der Produktionsanlage, insbesondere zur Überwachung und Steuerung und/oder Regelung des Prozesses innerhalb der Anlagenteile. Die Anlagenautomationen der mehreren Anlagenteile sind unabhängig voneinander und es erfolgt kein Informationsaustausch zwischen den Anlagenautomationen der mehreren Anlagenteile.

Eine Produktionsanlagensteuerung erzeugt Sollvorgaben für die Anlagenautomationen der mehreren Anlagenteile. Die Produktionsanlagensteuerung erfolgt im Stand der Technik separat für jeden Anlagenteil der Produktionsanlage.

Ferner weist eine Produktionsanlage üblicherweise ein Produktionsplanungssystem mit Informationen über die in der Produktionsanlage herzustellenden Produkte, insbesondere mit Zielkriterien für die herzustellenden Produkte, auf. Das Produktionsplanungssystem arbeitet dabei vorzugsweise Produktionsanlagenübergreifend, also für alle Anlagenteile gemeinsam. Das Produktionsplanungssystem enthält Informationen über die insgesamt in der Produktionsanlage, also von allen Anlagenteilen, herzustellenden Produkte.

Das erfindungsgemäße System umfasst ferner einen Modellgenerator zur Erzeugung wenigstens eines Vorhersagemodells für das aktuell in der Produktionsanlage hergestellte Produkt und/oder für die gemäß Produktionsplanungssystem zukünftig herzustellenden Produkte. Das Vorhersagemodell betrifft insbesondere die Vorhersage der für die Zielkriterien wesentlichen Eigenschaften der aktuell oder zukünftig herzustellenden Produkte. Der Modellgenerator berücksichtigt dabei die Ergebnisse der Überwachung der Produktionsanlage, insbesondere der mehreren Anlagenteile, bei der Erzeugung des wenigstens einen Vorhersagemodells. Das vom Modellgenerator erzeugte Vorhersagemodell liefert somit eine Vorhersage bezüglich des aktuellen und zukünftigen Produktionsprozesses in der Produktionsanlage, insbesondere eine Vorhersage der für die Zielkriterien relevanten Produkteigenschaften, z.B. basierend auf der Art des Herstellungsprozesses, repräsentiert durch für diesen charakteristische Prozessparameter. Das Vorhersagemodell betrifft die gesamte Produktionsanlage, wobei die mehreren Anlagenteile berücksichtigt werden.

Der Modellgenerator kann beispielsweise sensorische und/oder aktorische Daten der Anlagenautomation, insbesondere der mehreren Anlagenteile, verwenden. Die Verwendung sensorischer Daten der Anlagenautomation verbessert die Genauigkeit der Vorhersage des erzeugten Vorhersagemodells, während technologische Sollvorgaben für die Aktoren bzw. die einzelnen Steuer- oder Regelsysteme zu einem frühen Produktionsstadium zur Verfügung stehen.

Das wenigstens eine Vorhersagemodell bestimmt eine Wahrscheinlichkeit, dass ein oder mehrere Zielkriterien innerhalb eines definierten Bereichs liegen. Das Vorhersagemodell bestimmt somit eine Wahrscheinlichkeit, dass ein oder mehrere Zielkriterien des aktuell in der Produktionsanlage hergestellten Produkts und/oder zukünftig herzustellender Produkte innerhalb eines definierten Bereichs liegen. Anhand der bestimmten Wahrscheinlichkeit lässt sich bestimmen, ob das hergestellte Produkt für die vorgesehene Verwendung geeignet ist, also die vorgegebene Produktqualität aufweist. Alternativ kann das Vorhersagemodell auch einen einzelnen Wert für eine für die Zielkriterien relevante Eigenschaft vorhersagen. In diesem Fall erfolgt die Überprüfung beispielsweise dadurch, dass der Abstand einer für ein Zielkriterium relevanten Eigenschaft vom jeweiligen Zielwert bestimmt wird oder das Überschreiten eines unteren oder oberen Grenzwertes für diese Eigenschaft überwacht wird.

Das erfindungsgemäße System umfasst ferner einen Produktionsoptimierer zur Bestimmung eines optimierten Produktionsprozesses innerhalb der Produktionsanlage auf Basis der Daten der Anlagenautomation, des Produktionsplanungssystems und des von dem Modellgenerator erzeugten Vorhersagemodells. Der Produktionsoptimierer berücksichtigt dabei die produktionstechnischen Vorgaben der einzelnen Anlagenteile bei der Bestimmung des optimierten Produktionsprozesses innerhalb der Produktionsanlage. Es findet somit eine produktionsanlagenübergreifende Optimierung des Produktionsprozesses statt, welche sämtlich Informationen der anderen Systeme der Produktionsanlage berücksichtigt. Im Vergleich zu der aus der US 10,365,640 B2 bekannten Steuerung eines Produktionsprozesses wird nicht nur regelnd in den Produktionsprozess eingegriffen, sondern es findet eine produktionsanlagenübergreifende Optimierung statt.

Nach einer erfindungsgemäßen Variante ist die Produktionsanlage eine Anlage der metallerzeugenden Industrie oder der Stahlindustrie.

Gemäß einer weiteren Variante der Erfindung sind die mehreren Anlagenteile ausgewählt aus: Elektrolichtbogenofen, Hochofen, Konverter, Pfannenofen, Vakuumpfannenbehandlung, Stranggießanlage, Gießerei, Warmwalzwerk, Gießwalzanlage, Wiedererwärmungsofen, Beize, Kaltwalzwerk, Glühlinie, Verzinkungslinie, Verzinnungslinie, Lackierlinie, Quer- und Längsteillinie, Rohrwalzwerk, Trägerwalzwerk, Gesenkschmiede, Freiformschmiede und/oder Richtmaschine.

In einer bevorzugten Variante der Erfindung umfassen die mehreren Anlagenteile jeweils Sensoren zur Erfassung von Produkteigenschaften, Prozessparametern und/oder Betriebszuständen innerhalb des Anlagenteils. In jedem Anlagenteil können somit Produkteigenschaften, Prozessparameter und/oder Betriebszustände separat erfasst werden. Die Erfassung der Produkteigenschaften, Prozessparameter und/oder Betriebszustände erfolgt mittels geeigneter Sensoren. Insbesondere erfolgt die Erfassung von Produkteigenschaften, Prozessparameter und/oder Betriebszuständen kontinuierlich mit der Herstellung der Produkte. Die Messung bestimmter relevanter Eigenschaften findet jedoch nur am Ende des Produktionsprozesses im Labor statt, insbesondere an vorab abgetrennten Proben.

Nach einer zweckmäßigen Variante der Erfindung umfassen die mehreren Anlagenteile jeweils Aktoren zur Anpassung des Produktionsprozesses innerhalb des Anlagenteils. Die Aktoren setzen die Sollvorgaben für die Anlagenautomation um. Bei den Sollvorgaben handelt es sich also um Steuerbefehle für die Aktoren der Anlagenteile.

Gemäß einer erfindungsgemäßen Variante greift die Anlagenautomation auf die Daten der Sensoren und/oder Aktoren der mehreren Anlagenteile zu und/oder übermittelt Daten an die Sensoren und/oder Aktoren der mehreren Anlagenteile.

In einer vorteilhaften Variante der Erfindung umfasst das System weiterhin einen zentralen Datenspeicher für die einzelnen Komponenten des Systems, wobei die einzelnen Komponenten des Systems auf die Daten zugreifen können und insbesondere Daten anpassen können. Der zentrale Datenspeicher vereinfacht somit den Austausch der Daten zwischen den einzelnen Teilen des erfindungsgemäßen Systems, insbesondere zwischen den mehreren Anlagenteilen der Produktionsanlage und der übergeordneten Komponenten des erfindungsgemäßen Systems. Der zentrale Datenspeicher kann innerhalb der digitalen Infrastruktur der Produktionsanlage angeordnet sein oder außerhalb als sogenannter Cloud-Datenspeicher.

Nach einer zweckmäßigen Variante der Erfindung sind die Zielkriterien ausgewählt aus: Dicke, Breite, Länge, Gewicht, Zugfestigkeit, Streckgrenze, E-Modul, Bruchdehnung, Korrosionsbeständigkeit, Anwesenheit oder Anzahl von Oberflächendefekten verschiedener Art, Anzahl von Rissen an der Oberfläche oder innerhalb des Materials, DWTT Ergebnisse, Charpy Ergebnisse, Übergangstemperaturen von Zäh- zu Sprödbrüchen, Schichtdicke der Zinkschicht, Rohrwandstärke, Exzentrität, Steghöhe, Flanschhöhe, Flanschstärke, Profil, Planheit und dergleichen.

Gemäß einer vorteilhaften Variante der Erfindung basiert der Modellgenerator auf Methoden der Statistik, des maschinellen Lernens, der künstlichen Intelligenz oder dergleichen, um das Vorhersagemodell zu erzeugen.

In einer besonders vorteilhaften Variante der Erfindung erzeugt der Modellgenerator mehrere voneinander unterschiedliche Vorhersagemodelle, wobei sich die unterschiedlichen Vorhersagemodelle beispielsweise hinsichtlich der Erstellungsmethode, der ursprünglichen Daten und/oder der Lernalgorithmen unterscheiden. Insbesondere werden für das gleiche Zielkriterium mehrere Vorhersagemodelle erzeugt, welche beispielsweise unterschiedliche ursprüngliche Daten (Eingangsparameter) berücksichtigen. Es ist zweckmäßig, dass unterschiedliche Vorhersagemodelle mit unterschiedlichen Sätzen an Eingangsparametern verwendet werden, insbesondere wenn zu unterschiedlichen Zeiten während der Herstellung unterschiedliche Daten über ein Produkt vorliegen, so dass einige der Vorhersagemodelle bereits anwendbar sind, während für andere Vorhersagemodelle die notwendigen Eingangsparameter noch nicht vollständig vorliegen, da der Prozessschritt, in dem diese erzeugt werden, erst noch ausgeführt werden muss.

Gemäß einer erfindungsgemäßen Variante kann der Modellgenerator unterschiedliche Sätze an Eingangsvariablen verwenden, um die mehreren voneinander unterschiedlichen Vorhersagemodelle zu erstellen. Dabei kann es sich um solche Werte handeln, für die im Rahmen der Automation Sollvorgaben existieren (Vorgabe-Größen) oder aber Messwerte oder Signale, die sich reaktiv aus dem Produktionsprozess ergeben (Messdaten). Zweckmäßigerweise werden diese Werte prozessschrittweise zusammengefasst, so dass Vorhersagemodelle erzeugt werden, die bereits von Produktionsbeginn an nutzbar sind, weil sie nur Vorgabe-Größen verwenden, oder aber Vorhersagemodelle, für die nach einem bestimmten Prozessschritt alle für das Vorhersagemodell erforderlichen Messdaten verfügbar sind. Dies kann vorteilhaft sein, da mitunter reaktive Messdaten Informationen enthalten, die anderweitig schlecht erfassbar sind und somit ein präziseres Vorhersagemodell ermöglichen.

Für jeden Satz an Eingangsparametern kann im Allgemeinen eine Vielzahl an Vorhersagemodelle wie z.B. neuronale Netze, Entscheidungsbäume, Support Vector Machines, Lineare Modelle, Diskriminanten-Analyse, Bayessche Schätzer, Nächste Nachbarn, nichtlineare multivariate Regression, Splines erstellt werden.

Zur Auswahl können unterschiedliche Metriken der Bewertung verwendet werden. Aus der Liste der erstellten Vorhersagemodelle wird so für jeden Schritt, in dem eine Aktualisierung der Sollvorgaben für die Automation erfolgen soll ein Vorhersagemodell ausgewählt, welches der Optimierer dann nutzt. Bewertungsmetriken können z.B. der mittlere quadratische Fehler, der mittlere absolute Fehler, das Bestimmtheitsmaß o.ä. sein.

Nach einer zweckmäßigen Variante der Erfindung berücksichtigt der Prozessoptimierer das Vorhersagemodell, welches die aktuell beste Vorhersage für das aktuell in der Produktionsanlage hergestellte Produkt und/oder für die gemäß Produktionsplanungssystem zukünftig herzustellenden Produkte liefert, insbesondere unter Berücksichtigung eines oder mehrerer Zielkriterien.

Vor Beginn des Produktionsprozesses liegen naturgemäß keine Messdaten über ein konkretes Produkt vor. Der Optimierer nutzt daher ein Vorhersagemodell, welches sich lediglich solcher Eingangsparameter bedient, für die im Rahmen der Automation auch Sollvorgaben existieren. Durch den eigentlichen Optimierungsschritt (zweckmäßig unter Beachtung von Randbedingungen) werden die Sollwerte derart festgelegt, dass die Abweichung der einen oder mehreren Zielgrößen minimiert oder die Wahrscheinlichkeit, dass die Zielgröße einen Gültigkeitsbereich verlässt minimiert wird. Weitere Optimierungsziele ähnlicher Art sind ebenfalls umsetzbar. Der Produktionsprozess nutzt die derart ermittelten Sollvorgaben im Rahmen der Automation, wobei die Steuer- und Regelsysteme versuchen, die Sollvorgaben möglichst umzusetzen.

Während des ersten Prozessschritts wird vom Automationssystem eine Vielzahl an Messdaten erfasst. Dies beinhaltet sowohl solche Größen, für die auch Sollvorgaben bestanden wie auch weitere Messdaten. Im Allgemeinen kommt es aufgrund einer Vielzahl von Effekten zu Abweichungen der tatsächlichen Werte von den vorgegebenen Werten. Hierdurch und möglicherweise durch die Verwendung eines Vorhersagemodells, welches auch weitere Messdaten als Eingangsgrößen nutzt, ermittelt der Optimierer vor Beginn des nächsten Prozessschritts unter Zuhilfenahme eines möglichen anderen Vorhersagemodells die Sollvorgaben für alle folgenden Prozessschritte.

Dieser Vorgang kann bis zum letzten Prozessschritt fortgesetzt werden. Insgesamt wird dadurch die Produktion gemäß des aktuell besten Verständnisses über den Einfluss der Vorgabe-Größen auf die Qualitätskriterien hinsichtlich aller zu beachtenden Qualitätskriterien optimiert. Dadurch kommt es zu weniger Abwertungen oder Reklamationen und die Wirtschaftlichkeit des Produktionsprozesses wird verbessert.

Nachdem ein Produkt fertiggestellt wurde, findet zumeist eine Qualitätsbewertung statt, u.a. indem Proben des Produktes hinsichtlich bestimmter Qualitätseigenschaften geprüft werden, während andere Qualitätseigenschaften auch direkt während der Produktion gemessen werden. Dies kann, muss aber nicht für alle hergestellten Produkte der Fall sein.

Sobald eine neue Qualitätsbewertung für ein Produkt vorliegt, kann der Modellgenerator erneut damit beginnen, neue Vorhersagemodelle zu erzeugen, da neue Kenntnisse über die Wirkzusammenhänge in den neu hinzugekommenen Produktionsdaten und der Qualitätsbewertung vorliegen. Im Allgemeinen ist es ausreichend, dass dieser Schritt nicht nach jedem Produkt, sondern nach einer Mehrzahl an hergestellten Produkten ausgeführt wird.

Durch die regelmäßige Aktualisierung der Vorhersagemodelle kann sich ändernden Produktionsbedingungen Rechnung getragen werden und es wird sichergestellt, dass die Optimierung immer an den aktuellen Wirkmechanismen ausgerichtet erfolgt.

In einer bevorzugten Variante der Erfindung führt der Prozessoptimierer bei der Bestimmung des optimierten Produktionsprozesses innerhalb der Produktionsanlage eine Bewertung hinsichtlich eines oder mehrerer Zielkriterien aus. Eine Optimierung hinsichtlich mehrerer Zielkriterien ist insbesondere dann bevorzugt, wenn eine Verbindung zwischen den einzelnen Zielkriterien besteht. Es ist regelmäßig der Fall, dass die Optimierung hinsichtlich eines Zielkriteriums gleichzeitig einen Einfluss auf ein anderes Zielkriterium ausübt. Diese miteinander verbundenen Zielkriterien sollten bei der Optimierung gemeinsam berücksichtigt werden, da ansonsten bei der separaten Optimierung eines Zielkriteriums andere damit verbundene Zielkriterien einen zulässigen Wertebereich verlassen könnten.

Gemäß einer zweckmäßigen Variante beruht die Bewertung auf einer der folgenden Bewertungsfunktionen: mittlerer absoluter Fehler, mittlerer quadratischer Fehler, Summierter Wertverlust je Abweichung der Zielkriterien, Wahrscheinlichkeit für das Verlassen des Toleranzbereiches, oder dergleichen.

Nach einer weiteren zweckmäßigen Variante der Erfindung beruht der Prozessoptimierer auf Methoden der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen basiert.

In einer vorteilhaften Variante der Erfindung bestimmt der Prozessoptimierer die Auswirkungen von Sollwertänderungen auf die Zielvorgaben des aktuell in der Produktionsanlage hergestellten Produkts und/oder des gemäß Produktionsplanungssystem zukünftig herzustellenden Produkts. Der Prozessoptimierer bestimmt also ob eine Änderung der Sollvorgaben für die Anlagenautomation dazu führt, dass das wenigstens eine bzw. die mehreren Zielkriterien, welche Grundlage der Optimierung sind, die vorgegebenen Anforderungen erfüllen.

Gemäß einer besonders vorteilhaften Variante der Erfindung umfasst der Prozessoptimierer Informationen zu möglichen Sollwertänderungen der Produktionsanlage, insbesondere der einzelnen Anlagenteile. Der Prozessoptimierer verfügt vorzugsweise über Informationen von der Produktionsanlage, insbesondere der einzelnen Anlagenteile, umsetzbare Sollwertänderungen wie maximale Änderungsraten aktorischer Aktivität und/oder Abhängigkeiten einer einstellbaren Größe von anderen ebenfalls einstellbaren Größen. Dadurch kann der Prozessoptimierer die von der Produktionsanlage, insbesondere der Anlagenteile, umsetzbaren Sollwertänderungen bestimmen. Auf Basis der umsetzbaren Sollwertänderungen können die Sollvorgaben für die Anlagenautomation erstellt und an die Anlagenautomation weitergeleitet werden. Die Änderungsraten sind sowohl relevant für den Wechsel zwischen unterschiedlichen Produkten aber auch dafür, wenn sich die Eingangsdaten und damit die Vorhersagen über das Volumen des Produktes ändern. Häufige Fälle sind z.B. Schwankungen entlang der Bandlänge oder Bandbreite eines bandförmigen Produktes. In diesem Fall können durch den Optimierer auch verschiedene Sätze an Sollwerten erzeugt werden, so dass die Zielkriterien für die einzelnen Produktsegmente erfüllt werden. Durch die Restriktionen aufgrund der maximalen Änderungsraten wird berücksichtigt, dass der Prozess in aller Regel für zwei benachbarte Produktsegmente nicht stark unterschiedlich ablaufen kann. Nach einer vorteilhaften Variante der Erfindung optimiert der Prozessoptimierer den Produktionsprozess innerhalb der Produktionsanlage für eine Mehrzahl von Produktabschnitten. Dabei kann es sich beispielsweise um Abschnitte über die Länge oder Breite eines bandförmigen Produktes handeln, oder Bereiche wie Flansche oder Stege von trägerartigen Produkten.

Die Aufgabe wird ferner gelöst durch ein Verfahren nach Anspruch 11.

Gemäß dem erfindungsgemäßen Verfahren werden bei der Herstellung Produkten Informationen über die in der Produktionsanlage herzustellenden Produkte erfasst. Dies betrifft Zielkriterien für die herzustellenden Produkte. Sinn und Zweck des erfindungsgemäßen Verfahrens ist die Herstellung der Produkte bei Einhaltung der Zielvorgaben bei optimaler Ausnutzung der Produktionsanlage. Die Informationen über die in der Produktionsanlage herzustellenden Produkte sind üblicherweise in einem Produktionsplanungssystem hinterlegt und werden von dort abgefragt bzw. von diesem empfangen. Das Produktionsplanungssystem arbeitet dabei vorzugsweise Produktionsanlagenübergreifend, also für alle Anlagenteile gemeinsam. Das Produktionsplanungssystem enthält Informationen über die insgesamt in der Produktionsanlage, also von allen Anlagenteilen, herzustellenden Produkte.

Die Produktionsanlage besteht vorzugsweise aus mehreren voneinander unabhängigen, aber aufeinanderfolgenden Anlagenteilen.

Der Produktionsprozess in der Produktionsanlage wird überwacht, insbesondere innerhalb der mehreren Anlagenteile. Die Überwachung erfolgt beispielsweise innerhalb der Anlagenautomation in den einzelnen Anlagenteilen. Die Anlagenautomation ist zur Überwachung und Steuerung und/oder Regelung des Produktionsprozesses innerhalb der Produktionsanlage, insbesondere zur Überwachung und Steuerung und/oder Regelung des Prozesses innerhalb der Anlagenteile ausgebildet. Die Anlagenautomationen der mehreren Anlagenteile sind unabhängig voneinander und es erfolgt kein Informationsaustausch zwischen den Anlagenautomationen der mehreren Anlagenteile.

Gemäß dem erfindungsgemäßen Verfahren wird wenigstens ein Vorhersagemodell für das aktuell in der Produktionsanlage hergestellte Produkt und/oder für die zukünftig herzustellenden Produkte erstellt. Das Vorhersagemodell betrifft insbesondere die Einhaltung der Zielkriterien für die aktuell oder zukünftig herzustellenden Produkte. Die erfassten Informationen der Produktionsanlage, insbesondere der mehreren Anlagenteile, werden bei der Erzeugung des wenigstens einen Vorhersagemodells berücksichtigt. Das vom Modellgenerator erzeugte Vorhersagemodell liefert somit eine Vorhersage bezüglich des aktuellen und zukünftigen Produktionsprozesses in der Produktionsanlage. Das Vorhersagemodell betrifft die gesamte Produktionsanlage, wobei die mehreren Anlagenteile berücksichtigt werden.

Der Modellgenerator kann beispielsweise sensorische und/oder aktorische Daten der Anlagenautomation verwenden, insbesondere der mehreren Anlagenteile. Die Verwendung sensorischer Daten der Anlagenautomation verbessert die Genauigkeit der Vorhersage des erzeugten Vorhersagemodells, während technologische Sollvorgaben für die Aktoren bzw. die einzelnen Steuer- oder Regelsysteme zu einem frühen Produktionsstadium zur Verfügung stehen.

Das wenigstens eine Vorhersagemodell bestimmt eine Wahrscheinlichkeit, dass ein oder mehrere Zielkriterien innerhalb eines definierten Bereichs liegen. Das Vorhersagemodell bestimmt somit eine Wahrscheinlichkeit, dass ein oder mehrere Zielkriterien des aktuell in der Produktionsanlage hergestellten Produkts und/oder zukünftig herzustellender Produkte innerhalb eines definierten Bereichs liegen. Anhand der bestimmten Wahrscheinlich lässt sich bestimmen, ob das hergestellte Produkt für die vorgesehene Verwendung geeignet ist, also die vorgegebene Produktqualität aufweist.

Ferner wird erfindungsgemäß eine optimierter Produktionsprozesses bestimmt, welcher die Produktion innerhalb der Produktionsanlage auf Basis der erfassten Informationen über die in der Produktionsanlage herzustellenden Produkte, der Überwachung des Produktionsprozesses innerhalb der Produktionsanlage, insbesondere innerhalb der Anlagenteile, des wenigstens einen erzeugten Vorhersagemodells und produktionstechnischen Parametern der Produktionsanlage, insbesondere produktionstechnischen Parametern der einzelnen Anlagenteile, regelt. Es findet somit eine produktionsanlagenübergreifende Optimierung des Produktionsprozesses statt, welche sämtlich Informationen der anderen Systeme der Produktionsanlage berücksichtigt. Im Vergleich zu der aus der US 10,365,640 B2 bekannten Steuerung eines Produktionsprozesses wird nicht nur regelnd in den Produktionsprozess eingegriffen, sondern es findet eine produktionsanlagenübergreifende Optimierung statt.

Auf Basis des optimierten Produktionsprozesses werden Sollvorgaben für die Steuerung und/oder Regelung des Produktionsprozesses innerhalb der Produktionsanlage erzeugt und ausgeführt. Dies betrifft insbesondere die Steuerung und/oder Regelung der Prozesse innerhalb der Anlagenteile der Produktionsanlage.

Nach einer erfindungsgemäßen Variante ist die Produktionsanlage eine Anlage der metallerzeugenden Industrie oder der Stahlindustrie.

Gemäß einer weiteren Variante der Erfindung sind die mehreren Anlagenteile ausgewählt aus: Elektrolichtbogenofen, Hochofen, Konverter, Pfannenofen, Vakuumpfannenbehandlung, Stranggießanlage, Gießerei, Warmwalzwerk, Gießwalzanlage, Wiedererwärmungsofen, Beize, Kaltwalzwerk, Glühlinie, Verzinkungslinie, Verzinnungslinie, Lackierlinie, Quer- und Längsteillinie, Rohrwalzwerk, Trägerwalzwerk, Gesenkschmiede, Freiformschmiede und/oder Richtmaschine.

In einer bevorzugten Variante der Erfindung erfolgt die Überwachung des Produktionsprozesses innerhalb der Produktionsanlage, insbesondere innerhalb der Anlagenteile, mittels Sensoren. Besonders bevorzugt erfolgt die Überwachung des Produktionsprozesses innerhalb der Produktionsanlage, insbesondere innerhalb der Anlagenteile, kontinuierlich.

Nach einer zweckmäßigen Variante der Erfindung erfolgt die Steuerung und/oder Regelung des Produktionsprozesses innerhalb der Produktionsanlage, insbesondere die Steuerung und/oder Regelung der Prozesse innerhalb der Anlagenteile, mittels Aktoren. Dadurch können die erzeugten Sollvorgaben automatisch ausgeführt werden.

Gemäß einer vorteilhaften Variante umfasst das erfindungsgemäße Verfahren ferner den Schritt des Speicherns von Daten in einem zentralen Datenspeicher, insbesondere Daten bezüglich der Erfassung von Informationen über die in der Produktionsanlage herzustellenden Produkte, insbesondere mit Zielkriterien für die herzustellenden Produkte, Daten bezüglich der Überwachen des Produktionsprozesses innerhalb der Produktionsanlage, insbesondere innerhalb der Anlagenteile, Daten bezüglich der Erzeugung wenigstens eines Vorhersagemodells für das aktuell in der Produktionsanlage hergestellte Produkt und/oder für die zukünftig herzustellenden Produkte, insbesondere hinsichtlich der Einhaltung der Zielkriterien für die aktuell oder zukünftig herzustellenden Produkte, Daten bezüglich der Bestimmung eines optimierten Produktionsprozesses innerhalb der Produktionsanlage auf Basis der erfassten Informationen über die in der Produktionsanlage herzustellenden Produkte, der Überwachung des Produktionsprozesses innerhalb der Produktionsanlage, insbesondere innerhalb der Anlagenteile, des wenigstens einen erzeugten Vorhersagemodells und produktionstechnischen Parametern der Produktionsanlage, insbesondere produktionstechnischen Parametern der einzelnen Anlagenteile, und/oder Daten bezüglich der Erzeugung und Ausführung von Sollvorgaben für die Steuerung und/oder Regelung des Produktionsprozesses innerhalb der Produktionsanlage, insbesondere Steuerung und/oder Regelung der Prozesse innerhalb der Anlagenteile. Die zentrale Datenspeicherung vereinfacht den Austausch der Daten zwischen den einzelnen Teilen der Produktionsanlage, insbesondere zwischen den mehreren Anlagenteilen der Produktionsanlage und der übergeordneten Komponenten eines erfindungsgemäßen Systems ausgebildet zur Ausführung des erfindungsgemäßen Verfahrens.

In einer Variante der Erfindung sind die Zielkriterien ausgewählt aus: Dicke, Breite, Länge, Gewicht, Zugfestigkeit, Streckgrenze, E-Modul, Bruchdehnung, Korrosionsbeständigkeit, Anwesenheit oder Anzahl von Oberflächendefekten verschiedener Art, Anzahl von Rissen an der Oberfläche oder innerhalb des Materials, DWTT Ergebnisse, Charpy Ergebnisse, Übergangstemperaturen von Zäh- zu Sprödbrüchen, Schichtdicke der Zinkschicht, Rohrwandstärke, Exzentrität, Steghöhe, Flanschhöhe, Flanschstärke, Profil, Planheit und dergleichen.

Nach einer vorteilhaften Variante der Erfindung basiert die Erzeugung des wenigstens einen Vorhersagemodells auf Methoden der Statistik, des maschinellen Lernens, der künstlichen Intelligenz oder dergleichen. Derartige Methoden haben den Vorteil, dass diese sich ständig verbessern, insbesondere mit zunehmender Datenbasis. Die Methoden könne ständig trainiert, also verbessert, werden, wodurch sich die Genauigkeit der erstellten Vorhersagemodell kontinuierlich verbessert.

Gemäß einer besonders vorteilhaften Variante des erfindungsgemäßen Verfahrens umfasst das Verfahren den Schritt des Erzeugens von mehreren voneinander unterschiedlichen Vorhersagemodellen, wobei sich die unterschiedlichen Vorhersagemodelle beispielsweise hinsichtlich der Erstellungsmethode, der ursprünglichen Daten und/oder der Lernalgorithmen unterscheiden. Insbesondere werden für das gleiche Zielkriterium mehrere Vorhersagemodelle erzeugt, welche beispielsweise unterschiedliche ursprüngliche Daten (Eingangsparameter) berücksichtigen.. Es ist zweckmäßig, dass unterschiedliche Vorhersagemodelle mit unterschiedlichen Sätzen an Eingangsparametern verwendet werden, insbesondere wenn zu unterschiedlichen Zeiten während der Herstellung unterschiedliche Daten über ein Produkt vorliegen, so dass einige der Vorhersagemodelle bereits anwendbar sind, während für andere Vorhersagemodelle die notwendigen Eingangsparameter noch nicht vollständig vorliegen, da der Prozessschritt, in dem diese erzeugt werden, erst noch ausgeführt werden muss.

Gemäß einer erfindungsgemäßen Variante können unterschiedliche Sätze an Eingangsvariablen verwendet werden, um die mehreren voneinander unterschiedlichen Vorhersagemodelle zu erstellen. Dabei kann es sich um solche Werte handeln, für die im Rahmen der Automation Sollvorgaben existieren (Vorgabe-Größen) oder aber Messwerte oder Signale, die sich reaktiv aus dem Produktionsprozess ergeben (Messdaten). Zweckmäßigerweise werden diese Werte prozessschrittweise zusammengefasst, so dass Vorhersagemodelle erzeugt werden, die bereits von Produktionsbeginn an nutzbar sind, weil sie nur Vorgabe-Größen verwenden, oder aber Vorhersagemodelle, für die nach einem bestimmten Prozessschritt alle für das Vorhersagemodell erforderlichen Messdaten verfügbar sind. Dies kann vorteilhaft sein, da mitunter reaktive Messdaten Informationen enthalten, die anderweitig schlecht erfassbar sind und somit ein präziseres Vorhersagemodell ermöglichen.

Für jeden Satz an Eingangsparametern kann im Allgemeinen eine Vielzahl an Vorhersagemodelle wie z.B. neuronale Netze, Entscheidungsbäume, Support Vector Machines, Lineare Modelle, Diskriminanten-Analyse, Bayessche Schätzer, Nächste Nachbarn, nichtlineare multivariate Regression, Splines erstellt werden. Zur Auswahl können unterschiedliche Metriken der Bewertung verwendet werden. Aus der Liste der erstellten Vorhersagemodelle wird so für jeden Schritt, in dem eine Aktualisierung der Sollvorgaben für die Automation erfolgen soll ein Vorhersagemodell ausgewählt, welches der Optimierer dann nutzt. Bewertungsmetriken können z.B. der mittlere quadratische Fehler, der mittlere absolute Fehler, das Bestimmtheitsmaß o.ä. sein.

In einer zweckmäßigen Variante der Erfindung wird bei der Bestimmung des optimierten Produktionsprozesses innerhalb der Produktionsanlage das Vorhersagemodell berücksichtigt, welches die aktuell beste Vorhersage für das aktuell in der Produktionsanlage hergestellte Produkt und/oder für die zukünftig herzustellenden Produkte liefert. Dies erfolgt insbesondere unter Berücksichtigung eines oder mehrerer Zielkriterien.

Vor Beginn des Produktionsprozesses liegen naturgemäß keine Messdaten über ein konkretes Produkt vor. Der Optimierung nutzt daher ein Vorhersagemodell, welches sich lediglich solcher Eingangsparameter bedient, für die im Rahmen der Automation auch Sollvorgaben existieren. Durch den eigentlichen Optimierungsschritt (zweckmäßig unter Beachtung von Randbedingungen) werden die Sollwerte derart festgelegt, dass die Abweichung der einen oder mehreren Zielgrößen minimiert oder die Wahrscheinlichkeit, dass die Zielgröße einen Gültigkeitsbereich verlässt minimiert wird. Weitere Optimierungsziele ähnlicher Art sind ebenfalls umsetzbar. Der Produktionsprozess nutzt die derart ermittelten Sollvorgaben im Rahmen der Automation, wobei die Steuer- und Regelsysteme versuchen, die Sollvorgaben möglichst umzusetzen.

Während des ersten Prozessschritts wird vom Automationssystem eine Vielzahl an Messdaten erfasst. Dies beinhaltet sowohl solche Größen, für die auch Sollvorgaben bestanden wie auch weitere Messdaten. Im Allgemeinen kommt es aufgrund einer Vielzahl von Effekten zu Abweichungen der tatsächlichen Werte von den vorgegebenen Werten. Hierdurch und möglicherweise durch die Verwendung eines Vorhersagemodells, welches auch weitere Messdaten als Eingangsgrößen nutzt, ermittelt der Optimierer vor Beginn des nächsten Prozessschritts unter Zuhilfenahme eines möglichen anderen Vorhersagemodells die Sollvorgaben für alle folgenden Prozessschritte.

Dieser Vorgang kann bis zum letzten Prozessschritt fortgesetzt werden. Insgesamt wird dadurch die Produktion gemäß des aktuell besten Verständnisses über den Einfluss der Vorgabe-Größen auf die Qualitätskriterien hinsichtlich aller zu beachtenden Qualitätskriterien optimiert. Dadurch kommt es zu weniger Abwertungen oder Reklamationen und die Wirtschaftlichkeit des Produktionsprozesses wird verbessert.

Nachdem ein Produkt fertiggestellt wurde, findet zumeist eine Qualitätsbewertung statt, u.a. indem Proben des Produktes hinsichtlich bestimmter Qualitätseigenschaften geprüft werden, während andere Qualitätseigenschaften auch direkt während der Produktion gemessen werden. Dies kann, muss aber nicht für alle hergestellten Produkte der Fall sein.

Sobald eine neue Qualitätsbewertung für ein Produkt vorliegt, kann der Modellgenerator erneut damit beginnen, neue Vorhersagemodelle zu erzeugen, da neue Kenntnisse über die Wirkzusammenhänge in den neu hinzugekommenen Produktionsdaten und der Qualitätsbewertung vorliegen. Im Allgemeinen ist es ausreichend, dass dieser Schritt nicht nach jedem Produkt, sondern nach einer Mehrzahl an hergestellten Produkten ausgeführt wird.

Durch die regelmäßige Aktualisierung der Vorhersagemodelle kann sich ändernden Produktionsbedingungen Rechnung getragen werden und es wird sichergestellt, dass die Optimierung immer an den aktuellen Wirkmechanismen ausgerichtet erfolgt.

Nach einer bevorzugten Variante der Erfindung erfolgt bei der Bestimmung des optimierten Produktionsprozesses innerhalb der Produktionsanlage eine Bewertung hinsichtlich eines oder mehrerer Zielkriterien. Eine Optimierung hinsichtlich mehrerer Zielkriterien ist insbesondere dann bevorzugt, wenn eine Verbindung zwischen den einzelnen Zielkriterien besteht. Es ist regelmäßig der Fall, dass die Optimierung hinsichtlich eines Zielkriteriums gleichzeitig einen Einfluss auf ein anderes Zielkriterium ausübt. Diese miteinander verbundenen Zielkriterien sollten bei der Optimierung gemeinsam berücksichtigt werden, da ansonsten bei der separaten Optimierung eines Zielkriteriums andere damit verbundene Zielkriterien einen zulässigen Wertebereich verlassen könnten. Gemäß einer zweckmäßigen Variante der Erfindung beruht die Bewertung auf einer der folgenden Bewertungsfunktionen: mittlerer absoluter Fehler, mittlerer quadratischer Fehler, Summierter Wertverlust je Abweichung der Zielkriterien, Wahrscheinlichkeit für das Verlassen des Toleranzbereiches, oder dergleichen.

Erfindungsgemäß bestimmt das wenigstens eine Vorhersagemodell eine Wahrscheinlichkeit, dass ein oder mehrere Zielkriterien innerhalb eines definierten Bereichs liegen. Mittels dieser Wahrscheinlichkeit kann ermittelt werden, ob das in der Produktionsanlage hergestellte Produkt mit ausreichender Wahrscheinlichkeit die geforderten Qualitätsanforderungen erfüllt, da die Qualität des hergestellten Produkts mit der Einhaltung von vorgegebenen Zielkriterien korreliert.

Nach einer zweckmäßigen Variante der Erfindung basiert die Bestimmung des optimierten Produktionsprozesses innerhalb der Produktionsanlage auf Methoden der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Gemäß einer vorteilhaften Variante der Erfindung umfasst die Bestimmung des optimierten Produktionsprozesses innerhalb der Produktionsanlage die Prüfung von Auswirkungen von Sollwertänderungen auf die Zielvorgaben des aktuell in der Produktionsanlage hergestellten Produkts und/oder des zukünftig herzustellenden Produkts. Bei der Bestimmung des optimierten Produktionsprozesses wird also geprüft, ob eine Änderung der Sollvorgaben für die Anlagenautomation dazu führt, dass das wenigstens eine bzw. die mehreren Zielkriterien, welche Grundlage der Optimierung sind, die vorgegebenen Anforderungen erfüllen.

In einer bevorzugten Variante der Erfindung berücksichtigt die Bestimmung des optimierten Produktionsprozesses innerhalb der Produktionsanlage Informationen zu möglichen Sollwertänderungen der Produktionsanlage, insbesondere der einzelnen Anlagenteile. Dies betrifft insbesondere von der Produktionsanlage, insbesondere der einzelnen Anlagenteile, umsetzbare Sollwertänderungen wie maximale Änderungsraten aktorischer Aktivität und/oder Abhängigkeiten einer einstellbaren Größe von anderen ebenfalls einstellbaren Größen.

Nach einer vorteilhaften Variante der Erfindung optimiert das erfindungsgemäße Verfahren den Produktionsprozess innerhalb der Produktionsanlage für eine Mehrzahl von Produktabschnitten. Dabei kann es sich beispielsweise um Abschnitte über die Länge oder Breite eines bandförmigen Produktes handeln, oder Bereiche wie Flansche oder Stege von trägerartigen Produkten.

Die Erfindung betrifft insbesondere ein System zur Ausführung des erfindungsgemäßen Verfahrens. Das System kann zumindest teilweise durch eine Software implementiert werden, welche durch eine Recheneinrichtung ausgeführt wird, wobei die Recheneinrichtung zur Steuerung einer Produktionsanlage ausgebildet ist.

Nachfolgend wird die Erfindung anhand eines in der Figur dargestellten Ausführungsbeispiels näher erläutert. Es zeigt:

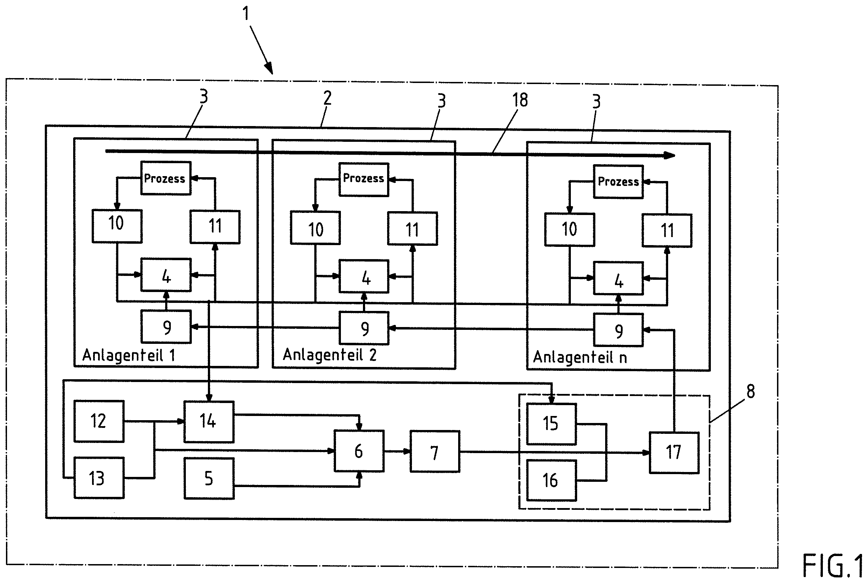

- Fig. 1: ein Blockdiagramm eines erfindungsgemäßen Systems zur Steuerung einer Produktionsanlage.

Figur 1 zeigt ein Blockdiagram eines erfindungsgemäßen Systems 1 zur Steuerung einer Produktionsanlage 2. Die Produktionsanlage 2 besteht aus mehreren Anlagenteilen 3. Insbesondere betrifft die Erfindung eine Steuerung 1 für eine Produktionsanlage 2 zur Erzeugung von Industriegütern wie metallischem Halbzeug, wie eine Anlage der metallerzeugenden Industrie oder der Stahlindustrie.

Bei den Anlagenteilen 2 der Produktionsanlage 2 handelt es sich beispielsweise um einen Elektrolichtbogenofen, einen Hochofen, einen Konverter, einen Pfannenofen, eine Vakuumpfannenbehandlung, eine Stranggießanlage, eine Gießerei, ein Warmwalzwerk, eine Gießwalzanlage, einen Wiedererwärmungsofen, eine Beize, ein Kaltwalzwerk, eine Glühlinie, eine Verzinkungslinie, eine Verzinnungslinie, eine Lackierlinie, eine Quer- und Längsteillinie, ein Rohrwalzwerk, ein Trägerwalzwerk, eine Gesenkschmiede, eine Freiformschmiede und/oder eine Richtmaschine. Generell ist ein Anlagenteil 2 im Sinne der Erfindung ein räumlich und/oder funktional abgrenzbarer Teil der Produktionsanlage 2. Die Anlagenteile 2 können wiederum in verschiedene Einheiten unterteilt sein, wie beispielsweise Zunderwäscher, Vorgerüst, Schere, Fertiggerüst, Kühlstrecke, Haspel.

Die Produktionsanlage 2 dient zur Herstellung von Produkten. Produkte sind einzeln identifizierbare Produktionsstücke, die sich durch die Produktionsanlage 2 bewegen, insbesondere sequentiell durch die Anlagenteile 3 der Produktionsanlage 2. Dabei sind die Produkte verschiedenen Prozessschritten unterworfen. Prinzipiell kann eine n:m Beziehung (mit ganzzahligen n, m) zwischen Eingangs- und Ausgangsprodukten der Produktionsanlage 2 und/oder der Anlagenteile 3 geben, beispielsweise durch Teilen und Verknüpfen von Produkten.

Als Prozess wird ein separat fassbarer Arbeitsschritt bezeichnet, der zu einer Änderung der Form oder der inneren oder äußeren Beschaffenheit eines Produktes führt.

Die Produktionsanlage 2, insbesondere die einzelnen Anlagenteile 3, weisen eine Anlagenautomation 4 auf. Die Anlagenautomation 4 dient zur Überwachung und Steuerung und/oder Regelung des Produktionsprozesses innerhalb der Produktionsanlage 2 bzw. der Anlagenteile 3. Die Anlagenautomation 4 umfasst Sensoren 10 und Aktoren 11 zur Überwachung und Steuerung und/oder Regelung.

Ein Sensor 10 im Sinne der Erfindung ist eine Messvorrichtung innerhalb der Produktionsanlage 2 bzw. der Anlagenteile 3, welche Informationen über die bearbeiteten Produkte oder den Betriebszustand der Produktionsanlage 2 bzw. der Anlagenteile 3 gibt. Es kann sich hierbei auch um Informationen aus Nebenprozessen, wie Labormessungen zu Eigenschaften der Produkte oder zum Anlagenzustand handeln, so dass auch Informationen über die Produktqualität verfügbar sind. Die Tatsache, dass ggfs. ein manueller Übertragungsschritt erforderlich ist, soll in diesem Zusammenhang keine Einschränkung darstellen. Generell dient ein Sensor 10 zur Erfassung von Produkteigenschaften und/oder Betriebszuständen innerhalb der Produktionsanlage 2 und/oder der Anlagenteile 3.

Ein Aktor 11 im Sinne der Erfindung ist eine Stellvorrichtung, mittels welcher auf den Betriebszustand der Produktionsanlage 2 bzw. der Anlagenteile 3 mittelbar oder unmittelbar eingewirkt werden kann, was gleichzeitig Auswirkungen auf das zu bearbeitende Produkt haben kann. Ein Aktor 11 dient also insbesondere zur Anpassung des Produktionsprozesses innerhalb der Produktionsanlage 2 und/oder der Anlagenteile 3.

Das erfindungsgemäße System kann ferner eine Sensorliste 12 und/oder Aktorliste 13 umfassen. Die Sensorliste 12 enthält beispielsweise Identifikatoren für Sensoren 10, die für die Steuerung der Produktion in der Produktionsanlage 2 bzw. der Anlagenteile 3 relevant sind. Die Sensorliste 12 kann alle oder nur einen Teil der Sensoren 10 der Produktionsanlage 2 bzw. der Anlagenteile 3 umfassen. Entsprechend enthält die Aktorliste beispielsweise Identifikatoren für Aktoren 11, die für die Steuerung der Produktion in der Produktionsanlage 2 bzw. der Anlagenteile 3 relevant sind. Die Aktorliste 13 kann alle oder nur einen Teil der Aktoren 11 der Produktionsanlage 2 bzw. der Anlagenteile 3 umfassen.

Als Automation im Sinne der Erfindung wird die Gesamtheit aller Steuerungs- und Regelvorgänge bezeichnet, die zum Betreiben der Produktionsanlage 2 bzw. der Anlagenteile 3 erforderlich sind, sowie die dazu erforderliche Hardware. Unter anderem bedient sich die Automation der Sensoren 10 und Aktoren 11.

Die Anlagenautomation 4 benötigt in aller Regel Vorgaben darüber, wie ein Arbeitsschritt zur Erzeugung eines Produktes durchzuführen ist. Diese Vorgaben werden erfindungsgemäß als Sollwerte bezeichnet.

Die Anlagenautomation 4 greift insbesondere auf Daten der Sensoren 10 und/oder Aktoren 11 zu oder übermittelt Daten an diese.

Das erfindungsgemäße System 1 bzw. die Produktionsanlage 2 umfasst ein Produktionsplanungssystem 5 mit Informationen über die in der Produktionsanlage 2 herzustellenden Produkte. Insbesondere enthält das Produktionsplanungssystem 5 Zielkriterien für die herzustellenden Produkte.

Für die Herstellung bestimmter Produkte bzw. deren Verkaufbarkeit spiele eine Reihe von Eigenschaften eine Rolle. Die Gesamtheit aller in Frage kommenden Eigenschaften wird erfindungsgemäß mit Zielkriterien bezeichnet. Die Zielkriterien sind beispielsweise ausgewählt aus: Dicke, Breite, Länge, Gewicht, Zugfestigkeit, Streckgrenze, E-Modul, Bruchdehnung, Korrosionsbeständigkeit, Anwesenheit oder Anzahl von Oberflächendefekten verschiedener Art, Anzahl von Rissen an der Oberfläche oder innerhalb des Materials, DWTT Ergebnisse, Charpy Ergebnisse, Übergangstemperaturen von Zäh- zu Sprödbrüchen, Schichtdicke der Zinkschicht, Rohrwandstärke, Exzentrität, Steghöhe, Flanschhöhe, Flanschstärke, Profil, Planheit und dergleichen.

Bei Nichterfüllung eines Zielkriteriums kann es erforderlich sein, ein Produkt einem anderen Verwendungszweck zuzuweisen, der im Allgemeinen mit einer geringeren Entlohnung einhergeht. Im schlimmsten Fall kann da Produkt keiner Verwendung zugeführt werden und muss entsorgt oder recycelt werden.

Das erfindungsgemäße System 1 umfasst ferner einen Modellgenerator 6 zur Erzeugung wenigstens eines Vorhersagemodells 7 für das aktuell in der Produktionsanlage 2 hergestellte Produkt und/oder für die gemäß Produktionsplanungssystem 5 zukünftig herzustellenden Produkte. Das erzeugte Vorhersagemodell 7 betrifft insbesondere die Einhaltung der Zielkriterien für die aktuell oder zukünftig herzustellenden Produkte. Der Modellgenetor 6 berücksichtigt bei der Erzeugung des wenigstens einen Vorhersagemodells 7 die Ergebnisse der Überwachung der Produktionsanlage 2, insbesondere der mehreren Anlagenteile 3.

Der Modellgenerator 6 stellt einen Zusammenhang zwischen Sensor- und Aktordaten und der Produktqualität des hergestellten Produkts her. Der Modellgenerator 6 basiert beispielsweise auf Methoden der Statistik, des maschinellen Lernens, der künstlichen Intelligenz oder dergleichen. Dieser Vorgang lässt sich allgemein als eine Funktion auffassen, die einem n-dimensionalen Vektor einen ein- oder mehrdimensionalen Vektor zuweist. Der mehrdimensionale Fall bezieht sich darauf, dass ggfs. mehrere Zielkriterien simultan beschrieben werden sollen, stellt aber keine Einschränkung dar. Um das wenigstens eine Vorhersagemodell 7 zu erzeugen werden Zusammenhänge zu einzelnen sensorischen oder aktorischen Parametern untersucht. Dies kann durch Überprüfung von Korrelation, geteilter Information, Shapley-Werten, Feature Ranking o.ä. oder auch nur modell-intrinsich geschehen. Hierbei kann ein Teil der in der Sensor- und Aktorliste 12, 13 verzeichneten Parameter als für das jeweilige Zielkriterium nicht relevant aussortiert werden, dies stellt aber keine Einschränkung dar. Neben den unterschiedlichen Modelltypen können sich diese auch durch die Wahl von grundlegenden Parametern ("Hyperparamater" - z.B. Anzahl und Verknüpfung von Neuronen in neuronalen Netzen) unterscheiden. Die Güte eines Vorhersagemodelles 7 wird durch eine Metrik definiert, gängige Varianten sind neben diversen anderen z.B. L1- oder L2-Maß ("mittlerer absoluter Fehler" oder "mittlerer quadratischer Fehler"). Wichtig ist, dass die Metrik eine Bewertung darüber trifft, wie gut ein Vorhersagemodell 7 in der Lage ist, aus den Sensor- und Aktordaten die Zielkriterien vorherzusagen. Für jedes Zielkriterium ist definiert, welches Bewertungsmaß verwendet wird. Bei der Parameterauswahl kann in besonderer Weise auf die Unterscheidung von Aktoren 11 und Sensoren 10 Wert gelegt werden, da nur über die Aktoren 11 ein Einwirken auf den Prozess und das Produkt möglich ist.

Ein trainiertes Vorhersagemodell 7 nutzt die Gesamtheit oder eine Auswahl der Sensor- und Aktordaten, um daraus eine Vorhersage für eines oder mehrerer der Zielkriterien zu treffen. Die Vorhersage soll mindestens beinhalten einen Erwartungswert für das Zielkriterium, kann aber zusätzlich auch eine Wahrscheinlichkeit enthalten, dass das Zielkriterium einen bestimmten kritischen Minimal- oder Maximalwert über- oder unterschreitet.

Das erfindungsgemäße System 1 umfasst weiterhin einen Produktionsoptimierer 8 zur Bestimmung eines optimierten Produktionsprozesses innerhalb der Produktionsanlage 2 auf Basis der Daten der Anlagenautomation 4, des Produktionsplanungssystems 5 und des von dem Modellgenerator 6 erzeugten Vorhersagemodells 7. Bei der Bestimmung des optimierten Produktionsprozesses innerhalb der Produktionsanlage 2 berücksichtigt der Produktionsoptimierer 8 die produktionstechnischen Vorgaben der einzelnen Anlagenteile 3.

In dem Produktionsoptimierer 8 sind beispielsweise ein oder mehrere Optimierungsverfahren 15 hinterlegt bzw. implementiert.

Die Bestimmung des optimierten Produktionsprozesses innerhalb der Produktionsanlage 2, insbesondere das wenigstens eine Optimierungsverfahren 15, basiert beispielsweise auf Methoden der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Der Produktionsoptimierer 8 greift auf das wenigstens eine Vorhersagemodell 7 zurück, um mit dessen Hilfe Auswirkungen bestimmter Parameterwahlen zu prognostizieren. Bei der Optimierung können wiederum verschiedene Mechanismen genutzt werden. So kann es Ziel sein, eine Zielgröße möglichst genau zu treffen oder aber die Wahrscheinlichkeit zu minimieren, dass eine bestimmte Größe außerhalb des erforderlichen Bereiches liegt. In besonderer Weise werden hierbei aktorische Größen berücksichtigt, da über diese auf das Produkt eingewirkt und eine Änderung der Zielgrößen erreicht werden kann. Bei der Optimierung kann auf Nebenbedingungen geachtet werden, so dass auch ein konkret umsetzbarer Satz an Sollvorgaben das Ergebnis der Optimierung ist.

Der Produktionsoptimierer 8 berücksichtigt vorzugsweise Nebenbedingungen 16. Die Nebenbedingungen müssen beispielsweise erfüllt sein, damit eine Vorgabe von Sollwerten auch anlagen- oder prozesstechnisch möglich ist. Dies betrifft beispielsweise maximale Änderungsraten aktorischer Aktivität und/oder Abhängigkeiten einer einstellbaren Größe von anderen ebenfalls einstellbaren Größen.

Zweckmäßigerweise bedient sich der Produktionsoptimierer 8 einer Zieloptimierung 17. Die Zieloptimierung 17 ist das konkret eingesetzte Verfahren, welches sich der Gesamtheit der vorgestellten Teilsysteme bedient, um final festzulegen, welche Sollvorgaben zur Erreichung bestimmter Zielgrößen getroffen werden. Im Allgemeinen muss ein Produkt simultan mehrere Zielgrößen erreichen, so dass entweder sichergestellt wird, dass für die verschiedenen Zielkriterien nur unterschiedliche Parameter mit Sollvorgaben belegt werden oder es muss eine gemeinsame Zieloptimierung für die zwei oder mehreren Zielkriterien erstellt werden, so dass eine eindeutige Sollvorgabe für den gewählten Parameter erfolgt. Die Zieloptimierung wird vor Produktionsbeginn genutzt, um die ersten Sollvorgaben zu erzeugen. Im weiteren Fortgang können Sollvorgaben für nachfolgende Prozessschritte auch zu einem späteren Zeitpunkt erzeugt oder aktualisiert werden, solange das Produkt den Einflussbereich eines bestimmten Aktors 11 noch nicht verlassen hat. Bei dieser Aktualisierung kann auch für eine gegebene Zielgröße eine andere Zieloptimierung genutzt werden, z. B. weil bestimmte sensorische Daten erst während oder nach einem Prozessschritt verfügbar werden aber eine genauere/bessere Sollvorgabe für noch freie Parameter ermöglichen.

Eine Produktionsanlagensteuerung 9 erzeugt Sollvorgaben für die Anlagenautomation 4 auf Basis des vom Produktionsoptimierer 8 bestimmten optimierten Produktionsprozesses.

Das erfindungsgemäße System 1 aus Figur 1 umfasst ferner einen zentralen Datenspeicher 14. Die anderen Komponenten des Systems 1 können auf diesen zentralen Datenspeicher 14 zugreifen, sofern dies notwendig ist. In diesen zentralen Datenspeicher 14 können beispielsweise die Produktionsanlage 2 bzw. die Anlagenteile 3 und insbesondere die Anlagenautomation 4 Daten speichern. Beispielsweise werden dort Daten der Sensoren 10 und/oder Aktoren 11 gespeichert. Die in dem zentralen Datenspeicher 14 hinterlegten Daten werden vom Modellgenerator 6 genutzt, um das wenigstens eine Vorhersagemodell 7 zu erzeugen.

Besonders bevorzugt erzeugt der Modellgenerator 6 mehrere voneinander unterschiedliche Vorhersagemodelle 7. Die unterschiedlichen Vorhersagemodelle 7 unterscheiden sich beispielsweise hinsichtlich der Erstellungsmethode, der ursprünglichen Daten und/oder der Lernalgorithmen.

Der Prozessoptimierer 8 berücksichtigt das Vorhersagemodell 7, welches die aktuell beste Vorhersage für das aktuell in der Produktionsanlage 2 hergestellte Produkt und/oder für die gemäß Produktionsplanungssystem 5 zukünftig herzustellenden Produkte liefert, insbesondere unter Berücksichtigung eines oder mehrerer Zielkriterien.

Ferner führt der Prozessoptimierer 8 bei der Bestimmung des optimierten Produktionsprozesses innerhalb der Produktionsanlage 2 eine Bewertung hinsichtlich eines oder mehrerer Zielkriterien aus. Die erfolgt beispielsweise durch Berücksichtigung der Zielkriterien durch die Optimierungsverfahren 15.

Der Prozessoptimierer 8 bestimmt insbesondere die Auswirkungen von Sollwertänderungen auf die Zielvorgaben des aktuell in der Produktionsanlage 2 hergestellten Produkts und/oder des gemäß Produktionsplanungssystem 5 zukünftig herzustellenden Produkts. Dies ist beispielsweise Teil der Zieloptimierung 17.

Vorteilhafterweise umfasst der Prozessoptimierer 8 Informationen zu möglichen Sollwertänderungen der Produktionsanlage 2, insbesondere der einzelnen Anlagenteile 3. Die Informationen betreffen insbesondere von der Produktionsanlage 2, insbesondere der einzelnen Anlagenteile 3, umsetzbare Sollwertänderungen wie maximale Änderungsraten aktorischer Aktivität und/oder Abhängigkeiten einer einstellbaren Größe von anderen ebenfalls einstellbaren Größen. Diese Informationen sind Teil der Nebenbedingungen 16.

Die Erfindung betrifft weiterhin ein Verfahren zur Steuerung einer aus mehreren Anlagenteilen 3 bestehenden Produktionsanlage 2, insbesondere einer Produktionsanlage 2 zur Erzeugung von Industriegütern wie metallischem Halbzeug. Das Verfahren wird beispielsweise von einem System 1 gemäß Figur 1 ausgeführt. Das System 1 kann zumindest teilweise durch eine Software implementiert werden, welche durch eine Recheneinrichtung ausgeführt wird, wobei die Recheneinrichtung zur Steuerung einer Produktionsanlage 2 ausgebildet ist.

Das erfindungsgemäße Verfahren umfasst die folgenden Schritte:
Erfassen von Informationen über die in der Produktionsanlage 2 herzustellenden Produkte, insbesondere von Zielkriterien für die herzustellenden Produkte,
Überwachen des Produktionsprozesses innerhalb der Produktionsanlage 2, insbesondere innerhalb der Anlagenteile 3,

Erzeugen wenigstens eines Vorhersagemodells 7 für das aktuell in der Produktionsanlage 2 hergestellte Produkt und/oder für die zukünftig herzustellenden Produkte, insbesondere hinsichtlich der Einhaltung der Zielkriterien für die aktuell oder zukünftig herzustellenden Produkte, wobei die erfassten Informationen der Produktionsanlage 2, insbesondere der mehreren Anlagenteile 3, bei der Erzeugung des wenigstens einen Vorhersagemodells 7 berücksichtigt werden,
Bestimmen eines optimierten Produktionsprozesses innerhalb der Produktionsanlage 2 auf Basis der erfassten Informationen über die in der Produktionsanlage 2 herzustellenden Produkte, der Überwachung des Produktionsprozesses innerhalb der Produktionsanlage 2, insbesondere innerhalb der Anlagenteile 3, des wenigstens einen erzeugten Vorhersagemodells 7 und produktionstechnischen Parametern der Produktionsanlage 2, insbesondere produktionstechnischen Parametern der einzelnen Anlagenteile 3,
Erzeugen und Ausführen von Sollvorgaben für die Steuerung und/oder Regelung des Produktionsprozesses innerhalb der Produktionsanlage 2, insbesondere Steuerung und/oder Regelung der Prozesse innerhalb der Anlagenteile 3.

Die Überwachung des Produktionsprozesses innerhalb der Produktionsanlage 2, insbesondere innerhalb der Anlagenteile 3, erfolgt mittels Sensoren 10. Insbesondere erfolgt die Überwachung des Produktionsprozesses innerhalb der Produktionsanlage 2, insbesondere innerhalb der Anlagenteile 3, kontinuierlich.

Das erfindungsgemäße Verfahren umfasst weiterhin den Schritt des Speicherns von Daten in einem zentralen Datenspeicher 14, insbesondere Daten bezüglich der Erfassung von Informationen über die in der Produktionsanlage 2 herzustellenden Produkte, insbesondere mit Zielkriterien für die herzustellenden Produkte, Daten bezüglich der Überwachen des Produktionsprozesses innerhalb der Produktionsanlage 2, insbesondere innerhalb der Anlagenteile 3, Daten bezüglich der Erzeugung wenigstens eines Vorhersagemodells 7 für das aktuell in der Produktionsanlage 2 hergestellte Produkt und/oder für die zukünftig herzustellenden Produkte, insbesondere hinsichtlich der Einhaltung der Zielkriterien für die aktuell oder zukünftig herzustellenden Produkte, Daten bezüglich der Bestimmung eines optimierten Produktionsprozesses innerhalb der Produktionsanlage 2 auf Basis der erfassten Informationen über die in der Produktionsanlage 2 herzustellenden Produkte, der Überwachung des Produktionsprozesses innerhalb der Produktionsanlage 2, insbesondere innerhalb der Anlagenteile 3, des wenigstens einen erzeugten Vorhersagemodells 7 und produktionstechnischen Parametern der Produktionsanlage 2, insbesondere produktionstechnischen Parametern der einzelnen Anlagenteile 3, und/oder Daten bezüglich der Erzeugung und Ausführung von Sollvorgaben für die Steuerung und/oder Regelung des Produktionsprozesses innerhalb der Produktionsanlage 2, insbesondere Steuerung und/oder Regelung der Prozesse innerhalb der Anlagenteile 3.

Die Erzeugung des wenigstens einen Vorhersagemodells 7 basiert beispielsweise auf Methoden der Statistik, des maschinellen Lernens, der künstlichen Intelligenz oder dergleichen.

Das wenigstens eine Vorhersagemodell 7 bestimmt eine Wahrscheinlichkeit, dass ein oder mehrere Zielkriterien innerhalb eines definierten Bereichs liegen.

In einer besonders vorteilhaften Variante umfasst das erfindungsgemäße Verfahren den Schritt des Erzeugens von mehreren voneinander unterschiedlichen Vorhersagemodellen 7, wobei sich die unterschiedlichen Vorhersagemodelle 7 beispielsweise hinsichtlich der Erstellungsmethode, der ursprünglichen Daten und/oder der Lernalgorithmen unterscheiden.

Bei Bestimmung des optimierten Produktionsprozesses innerhalb der Produktionsanlage 2 wird in der vorgenannten Variante das Vorhersagemodell 7 berücksichtigt, welches die aktuell beste Vorhersage für das aktuell in der Produktionsanlage 2 hergestellte Produkt und/oder für die zukünftig herzustellenden Produkte liefert, insbesondere unter Berücksichtigung eines oder mehrerer Zielkriterien.

Bei der Bestimmung des optimierten Produktionsprozesses innerhalb der Produktionsanlage 2 erfolgt insbesondere eine Bewertung hinsichtlich eines oder mehrerer Zielkriterien.

Die Bestimmung des optimierten Produktionsprozesses innerhalb der Produktionsanlage 2 prüft die Auswirkungen von Sollwertänderungen auf die Zielvorgaben des aktuell in der Produktionsanlage 2 hergestellten Produkts und/oder des zukünftig herzustellenden Produkts.

Ferner kann die Bestimmung des optimierten Produktionsprozesses innerhalb der Produktionsanlage 2 Informationen zu möglichen Sollwertänderungen der Produktionsanlage 2, insbesondere der einzelnen Anlagenteile 3, berücksichtigen. Dies sind beispielsweise von der Produktionsanlage 2, insbesondere der einzelnen Anlagenteile 3, umsetzbare Sollwertänderungen wie maximale Änderungsraten aktorischer Aktivität und/oder Abhängigkeiten einer einstellbaren Größe von anderen ebenfalls einstellbaren Größen.

Die Produktionsreihenfolge 18 der Produktionsanlage 2 aus Fig. 1 ist durch einen Pfeil gekennzeichnet, gemäß welchem die Produktion sequentiell von links nach rechts verläuft. Es werden also aufeinanderfolgende Produktionsschritte sequentiell durchgeführt, wobei die erfindungsgemäße Steuerung sämtliche sequentiellen Produktionsschritte betrifft.

Nachfolgend und unabhängig von dem Ausführungsbeispiel aus Fig. 1 wird nachfolgend ein Anwendungsszenario für das erfindungsgemäße Verfahren erläutert. Es ist bekannt, dass hinsichtlich der mechanischen Eigenschaften von Metallprodukten ein Wärmebehandlungsschritt einen starken Einfluss hat. Dadurch ist es möglich, auf bestimmte Prozessabweichungen in den vorherigen Prozessstufen (z.B. Schmelzen, Gießen, Warmwalzen, Beizen, Kaltwalzen) korrigierend einzuwirken. Hierfür werden verschiedene Modelle 7 trainiert, die eine Vorhersage der mechanischen Eigenschaften erlauben bzw. eine Vorhersage, dass diese einen bestimmten Gültigkeitsbereich treffen oder verlassen. Ein Teil der Modelle 7 nutzt hierfür lediglich Vorgabegrößen, wie z.B. Kohlenstoffgehalt, Mangangehalt, Warmwalztemperatur, Haspeltemperatur, Kaltumformgrad o.ä. Andere Modelle 7 können auch reaktive Messgrößen, wie z.B. Antriebsleistungen oder Kräfte bei Umformprozessen bzw. bei der Bewegung eines Bandes verwenden. Der Optimierer 8 legt mit einem solchen Modell 7 die Sollvorgaben für die einzelnen Prozessschritte fest. Sobald ein Prozessschritt abgeschlossen ist (z.B. die metallurgische Behandlung zur Einstellung der chemischen Analyse) liegen auch konkrete Messwerte vor. Dasselbe oder ein neues Modell 7 kann dann verwendet werden, um im Rahmen des Optimierers 8 aktualisierte Sollvorgaben zu erzeugen. Wird das gleiche Modell 7 wie zuvor verwendet oder ein anderes, welches aber teilweise die gleichen Eingangsparameter nutzt wie zuvor, insbesondere solche, die Vorgabegrößen des gerade abgelaufenen Prozesses sind, so kann der Optimierer 8 die bereits im Rahmen des Schmelzvorgangs umgesetzten Größen diese nicht mehr zur Optimierung heranziehen, sondern muss für diese die durch die Sensorik 10 ermittelten Werte fest verwenden. Dadurch wird die Information über das aktuelle Produktstück optimal ausgenutzt. Die Vorgabe für weitere Prozessschritte richtet sich dann nach etwaigen Abweichungen in der chemischen Analyse. In gleicher Weise können dann, sobald der Warmwalzprozess abgeschlossen ist, die Vorgaben für folgende Prozessschritte gemäß der tatsächlichen Warmwalz- oder Haspeltemperatur angepasst werden oder aber es kommt ein anderes Modell 7 zum Einsatz, dass beispielsweise die Walzkräfte als Eingangsgröße nutzt. Dieser Vorgang wiederholt sich dann mit Abschluss des Kaltwalzens, so dass für den Prozess an der Glühlinie ein entsprechend verbesserter Satz an Sollvorgaben vorliegt.

Wichtig ist hierbei, dass erstens die Erzeugung einer Vielzahl von Modellen 7 Teil des Systems 1 ist, dass außerdem eine Vielzahl von Qualitätskriterien simultan optimiert wird und drittens, dass eine kontinuierliche Verbesserung aller Teilprozesse jeweils unter Ausnutzung der maximal verfügbaren Information erfolgt.

### Bezugszeichenliste

- 1: System
- 2: Produktionsanlage
- 3: Anlagenteil
- 4: Anlagenautomation
- 5: Produktionsplanungssystem
- 6: Modellgenerator
- 7: Vorhersagemodell
- 8: Produktionsoptimierer
- 9: Produktionsanlagensteuerung
- 10: Sensor
- 11: Aktor
- 12: Sensorliste
- 13: Aktorliste
- 14: Datenspeicher
- 15: Optimierungsverfahren
- 16: Nebenbedingungen
- 17: Zieloptimierung
- 18: Produktionsreihenfolge

## Patentansprüche

1. System (1) zur Steuerung einer aus mehreren Anlagenteilen (3) bestehenden Produktionsanlage (2), insbesondere einer Produktionsanlage (2) zur Erzeugung von Industriegütern wie metallischem Halbzeug, umfassend:
die aus mehreren Anlagenteilen (3) bestehende Produktionsanlage (2),
jeweils eine Anlagenautomation (4) zur Überwachung und Steuerung und/oder Regelung des Prozesses innerhalb der Anlagenteile (3), wobei die Anlagenautomationen (4) der mehreren Anlagenteile (3) unabhängig voneinander sind und kein Informationsaustausch zwischen den Anlagenautomationen (4) der mehreren Anlagenteile (3) erfolgt,
ein Produktionsplanungssystem (5) mit Informationen über die in der Produktionsanlage (2) herzustellenden Produkte, die Informationen umfassend Zielkriterien für die herzustellenden Produkte,
einen Modellgenerator (6) zur Erzeugung wenigstens eines Vorhersagemodells (7) für das aktuell in der Produktionsanlage (2) hergestellte Produkt und/oder für die gemäß Produktionsplanungssystem (5) zukünftig herzustellenden Produkte, wobei das Vorhersagemodell (7) eingerichtet ist, eine Wahrscheinlichkeit zu bestimmen,
dass ein oder mehrere Zielkriterien des aktuell in der Produktionsanlage (2) hergestellten Produkts und/oder zukünftig herzustellender Produkte innerhalb eines definierten Bereichs liegen, wobei der Modellgenerator (6) eingerichtet ist, die Ergebnisse
der Überwachung der mehreren Anlagenteile (3) bei der Erzeugung des wenigstens einen Vorhersagemodells (7) zu berücksichtigen,
einen Produktionsoptimierer (8), eingerichtet zur Bestimmung eines optimierten Produktionsprozesses innerhalb der Produktionsanlage (2) auf Basis der Daten der Anlagenautomationen (4), des Produktionsplanungssystems (5) und des von dem Modellgenerator (6) erzeugten Vorhersagemodells (7), wobei der Produktionsoptimierer (8) eingerichtet ist,
die produktionstechnischen Vorgaben der einzelnen Anlagenteile (3) bei der Bestimmung des optimierten Produktionsprozesses innerhalb der Produktionsanlage (2) zu berücksichtigen, und
eine Produktionsanlagensteuerung (9), eingerichtet zur Erzeugung von Sollvorgaben für die Anlagenautomationen (4) auf Basis des vom Produktionsoptimierer (8) bestimmten optimierten Produktionsprozesses.

2. System (1) nach Anspruch 1,
wobei die mehreren Anlagenteile (3) jeweils Sensoren (10) umfassen, zur Erfassung von Produkteigenschaften, Prozessparametern und/oder Betriebszuständen innerhalb des Anlagenteils (3).

3. System (1) nach Anspruch 1 oder Anspruch 2,
weiterhin umfassend einen zentralen Datenspeicher (14) für die einzelnen Komponenten des Systems (1), wobei die einzelnen Komponenten des Systems (1) auf die Daten zugreifen können und insbesondere Daten anpassen können.

4. System (1) nach einem der Ansprüche 1 bis 3,
wobei Zielkriterien ausgewählt sind aus: Dicke, Breite, Länge, Gewicht, Zugfestigkeit, Streckgrenze, E-Modul, Bruchdehnung, Korrosionsbeständigkeit, Anwesenheit oder Anzahl von Oberflächendefekten verschiedener Art, Anzahl von Rissen an der Oberfläche oder innerhalb des Materials, DWTT Ergebnisse, Charpy Ergebnisse, Übergangstemperaturen von Zäh- zu Sprödbrüchen, Schichtdicke der Zinkschicht, Rohrwandstärke, Exzentrität, Steghöhe, Flanschhöhe, Flanschstärke, Profil, Planheit und dergleichen.

5. System (1) nach einem der Ansprüche 1 bis 4,
wobei der Modellgenerator (6) eingerichtet ist, mehrere voneinander unterschiedliche Vorhersagemodelle (7) zu erzeugen, wobei sich die unterschiedlichen Vorhersagemodelle (7) beispielsweise hinsichtlich der Erstellungsmethode, der ursprünglichen Daten und/oder der Lernalgorithmen unterscheiden.

6. System (1) nach Anspruch 5,
wobei der Produktionsoptimierer (8) eingerichtet ist, das Vorhersagemodell (7) zu berücksichtigen, welches die aktuell beste Vorhersage für das aktuell in der Produktionsanlage (2) hergestellte Produkt und/oder für die gemäß Produktionsplanungssystem (5) zukünftig herzustellenden Produkte liefert, insbesondere unter Berücksichtigung eines oder mehrerer Zielkriterien.

7. System (1) nach einem der Ansprüche 1 bis 6,
wobei der Produktionsoptimierer (8) eingerichtet ist, bei der Bestimmung des optimierten Produktionsprozesses innerhalb der Produktionsanlage (2) eine Bewertung hinsichtlich eines oder mehrerer Zielkriterien auszuführen.

8. System (1) nach einem der Ansprüche 1 bis 7,
wobei der Produktionsoptimierer (8) eingerichtet ist, die Auswirkungen von Sollwertänderungen auf die Zielvorgaben des aktuell in der Produktionsanlage (2) hergestellten Produkts und/oder des gemäß Produktionsplanungssystem (5) zukünftig herzustellenden Produkts zu bestimmen.

9. System (1) nach einem der Anspruch 8,
wobei der Produktionsoptimierer (8) Informationen zu möglichen Sollwertänderungen der Produktionsanlage (2), insbesondere der einzelnen Anlagenteile (3), umfasst, insbesondere von der Produktionsanlage (2), insbesondere der einzelnen Anlagenteile (3), umsetzbare Sollwertänderungen wie maximale Änderungsraten aktorischer Aktivität und/oder Abhängigkeiten einer einstellbaren Größe von anderen ebenfalls einstellbaren Größen.

10. System (1) nach einem der Ansprüche 1 bis 9,
wobei der Produktionsoptimierer (8) eingerichtet ist, den Produktionsprozess innerhalb der Produktionsanlage (2) für eine Mehrzahl von Produktabschnitten zu optimieren.

11. Verfahren zur Steuerung einer aus mehreren Anlagenteilen (3) bestehenden Produktionsanlage (2), insbesondere einer Produktionsanlage (2) zur Erzeugung von Industriegütern wie metallischem Halbzeug, umfassend die Schritte:
Erfassen von Informationen über die in der Produktionsanlage (2) herzustellenden Produkte, die Informationen umfassend Zielkriterien für die herzustellenden Produkte,
Überwachen des Produktionsprozesses innerhalb der Anlagenteile (3), wobei Anlagenautomationen (4) der mehreren Anlagenteile (3) unabhängig voneinander sind und kein Informationsaustausch zwischen den Anlagenautomationen (4) der mehreren Anlagenteile (3) erfolgt,
Erzeugen wenigstens eines Vorhersagemodells (7) für das aktuell in der Produktionsanlage (2) hergestellte Produkt und/oder für die zukünftig herzustellenden Produkte, wobei das Vorhersagemodell (7) eine Wahrscheinlichkeit bestimmt, dass ein oder mehrere Zielkriterien des aktuell in der Produktionsanlage (2) hergestellten Produkts und/oder zukünftig herzustellender Produkte innerhalb eines definierten Bereichs liegen, wobei die erfassten Informationen der mehreren Anlagenteile (3), bei der Erzeugung des wenigstens einen Vorhersagemodells (7) berücksichtigt werden,
Bestimmen eines optimierten Produktionsprozesses innerhalb der Produktionsanlage (2) auf Basis der erfassten Informationen über die in der Produktionsanlage (2) herzustellenden Produkte, der Überwachung des Produktionsprozesses innerhalb der Anlagenteile (3), des wenigstens einen erzeugten Vorhersagemodells (7) und produktionstechnischen Parametern der einzelnen Anlagenteile (3),
Erzeugen und Ausführen von Sollvorgaben für die Steuerung und/oder Regelung der Prozesse innerhalb der Anlagenteile (3) auf Basis des optimierten Produktionsprozesses.

12. Verfahren nach Anspruch 11,
wobei die Überwachung des Produktionsprozesses innerhalb der Produktionsanlage (2), insbesondere innerhalb der Anlagenteile (3), mittels Sensoren (10) erfolgt, vorzugsweise erfolgt die Überwachung des Produktionsprozesses innerhalb der Produktionsanlage (2), insbesondere innerhalb der Anlagenteile (3), kontinuierlich.

13. Verfahren nach Anspruch 11 oder Anspruch 12,
weiterhin umfassend den Schritt des Speicherns von Daten in einem zentralen Datenspeicher (14), insbesondere Daten bezüglich der Erfassung von Informationen über die in der Produktionsanlage (2) herzustellenden Produkte, insbesondere mit Zielkriterien für die herzustellenden Produkte, Daten bezüglich der Überwachen des Produktionsprozesses innerhalb der Produktionsanlage (2), insbesondere innerhalb der Anlagenteile (3), Daten bezüglich der Erzeugung wenigstens eines Vorhersagemodells (7) für das aktuell in der Produktionsanlage (2) hergestellte Produkt und/oder für die zukünftig herzustellenden Produkte, insbesondere hinsichtlich der Einhaltung der Zielkriterien für die aktuell oder zukünftig herzustellenden Produkte, Daten bezüglich der Bestimmung eines optimierten Produktionsprozesses innerhalb der Produktionsanlage (2) auf Basis der erfassten Informationen über die in der Produktionsanlage (2) herzustellenden Produkte, der Überwachung des Produktionsprozesses innerhalb der Produktionsanlage (2), insbesondere innerhalb der Anlagenteile (3), des wenigstens einen erzeugten Vorhersagemodells (7) und produktionstechnischen Parametern der Produktionsanlage (2), insbesondere produktionstechnischen Parametern der einzelnen Anlagenteile (3), und/oder Daten bezüglich der Erzeugung und Ausführung von Sollvorgaben für die Steuerung und/oder Regelung des Produktionsprozesses innerhalb der Produktionsanlage (2), insbesondere Steuerung und/oder Regelung der Prozesse innerhalb der Anlagenteile (3).

14. Verfahren nach einem der Ansprüche 11 bis 13,
wobei die Erzeugung des wenigstens einen Vorhersagemodells (7) auf Methoden der Statistik, des maschinellen Lernens, der künstlichen Intelligenz oder dergleichen basiert.

15. Verfahren nach einem der Ansprüche 11 bis 14,
umfassend den Schritt des Erzeugens von mehreren voneinander unterschiedlichen Vorhersagemodellen (7), wobei sich die unterschiedlichen Vorhersagemodelle (7) beispielsweise hinsichtlich der Erstellungsmethode, der ursprünglichen Daten und/oder der Lernalgorithmen unterscheiden.

16. Verfahren nach Anspruch 15,
wobei die Bestimmung des optimierten Produktionsprozesses innerhalb der Produktionsanlage (2) das Vorhersagemodell (7) berücksichtigt, welches die aktuell beste Vorhersage für das aktuell in der Produktionsanlage (2) hergestellte Produkt und/oder für die zukünftig herzustellenden Produkte liefert, insbesondere unter Berücksichtigung eines oder mehrerer Zielkriterien.

17. Verfahren nach einem der Ansprüche 11 bis 16,
wobei bei der Bestimmung des optimierten Produktionsprozesses innerhalb der Produktionsanlage (2) eine Bewertung hinsichtlich eines oder mehrerer Zielkriterien erfolgt.

18. Verfahren nach einem der Ansprüche 11 bis 17,
wobei die Bestimmung des optimierten Produktionsprozesses innerhalb der Produktionsanlage (2) die Auswirkungen von Sollwertänderungen auf die Zielvorgaben des aktuell in der Produktionsanlage (2) hergestellten Produkts und/oder des zukünftig herzustellenden Produkts prüft.

19. Verfahren nach einem der Ansprüche 11 bis 18,
wobei die Bestimmung des optimierten Produktionsprozesses innerhalb der Produktionsanlage (2) Informationen zu möglichen Sollwertänderungen der Produktionsanlage (2), insbesondere der einzelnen Anlagenteile (3), berücksichtigt, insbesondere von der Produktionsanlage (2), insbesondere der einzelnen Anlagenteile (3), umsetzbare Sollwertänderungen wie maximale Änderungsraten aktorischer Aktivität und/oder Abhängigkeiten einer einstellbaren Größe von anderen ebenfalls einstellbaren Größen.

## Claims

1. System (1) for controlling a production plant (2) consisting of a plurality of plant parts (3), particularly a production plant (2) for producing industrial goods such as metallic semifinished products, comprising:
the production plant (2) consisting of a plurality of plant parts (3),
a respective automatic plant unit (4) for monitoring and controlling and/or regulating the process within each of the plant parts (3), wherein the automatic plant units (4) of the plurality of plant parts (3) are independent of one another and no exchange of information takes place between the automatic plant units (4) of the plurality of plant parts (3),
a production planning system (5) with data about the products to be produced in the production plant (2), the data comprising target criteria for the products to be produced,
a model generator (6) for generating at least one prediction model (7) for the product currently produced in the production plant (2) and/or for products to be produced in the future in accordance with the production planning system (5), wherein the prediction model (7) is arranged to determine a probability that one or more target criteria of the product currently produced in the production plant (2) and/or products to be produced in the future lie within a defined range, wherein the model generator (6) is arranged to take into consideration the results of monitoring the plurality of plant parts (3) when generating the at least one prediction model (7),
a production optimiser (8) arranged for determining an optimised production process within the production plant (2) on the basis of the data of the automatic plant units (4), of the production planning system (5) and of the prediction model (7) generated by the model generator (6), wherein the production optimiser (8) is arranged to take into consideration the technical production setpoints of the individual plant parts (3) when determining the optimised production process within the production plant (2),
and a production plant control (9) arranged for generating target setpoints for the automatic plant units (4) on the basis of the optimised production process determined by the production optimiser (8).

2. System (1) according to claim 1, wherein the plurality of plant parts (3) comprises respective sensors (10) for detection of product characteristics, process parameters and/or operating states with the plant part (3).

3. System (1) according to claim 1 or claim 2, further comprising a central data memory (14) for the individual components of the system (1), wherein the individual components of the system (1) can access the data and, in particular, can adapt the data.

4. System (1) according to any one of claims 1 to 3, wherein target criteria are selected from thickness, width, length, weight, tensile strength, yield strength, modulus of elasticity, elongation at break, corrosion resistance, presence or number of surface defects of different kinds, number of cracks at the surface or within the material, drop weight tear test results, Charpy results, transition temperatures from ductile fracture to brittle fracture, layer thickness of zinc coating, tube wall thickness, eccentricity, web height, flange height, flange thickness, profile, planarity and the like.

5. System (1) according to any one of claims 1 to 4, wherein the model generator (6) is arranged to generate a plurality of mutually different prediction models (7), wherein the different prediction models (7) differ with respect to, for example, method of creation, original data and/or learning algorithms.

6. System (1) according to claim 5, wherein the production optimiser (8) is arranged to take into consideration the prediction model (7) which delivers the currently best prediction for the product currently produced in the production plant (2) and/or for the products to be produced in the future in accordance with the production planning system (5), particularly with consideration of one or more target criteria.

7. System (1) according to any one of claims 1 to 6, wherein the production optimiser (8) is arranged to carry out an evaluation with respect to one or more target criteria when determining the optimised production process within the production plant (2).

8. System (1) according to any one of claims 1 to 7, wherein the production optimiser (8) is arranged to determine the effects of target value changes on the target specifications of the product currently produced in the production plant (2) and/or the product to be produced in the future in accordance with the production planning system (5).

9. System (1) according to claim 8, wherein the production optimiser (8) comprises data with respect to possible target value changes of the production plant (2), particularly the individual plant parts (3), particularly target value changes which can be realised by the production plant (2), particularly the individual plant parts (3), such as maximum rates of change of actuator activity and/or dependencies of a settable variable on other similarly settable variables.

10. System (1) according to any one of claims 1 to 9, wherein the production optimiser (8) is arranged to optimise the production process within the production plant (2) for a plurality of product sections.

11. Method of controlling a production plant (2) consisting of a plurality of plant parts (3), particularly a production plant (2) for producing industrial goods such as metallic semifinished products, comprising the steps:
detecting data with respect to the products to be produced in the production plant (2), the data comprising target criteria for the products to be produced,
monitoring the production process within the plant parts (3), wherein automatic plant units (4) of the plurality of plant parts are independent of one another and no exchange of data takes place between the automatic plant units (4) of the plurality of plant parts (3),
generating at least one prediction model (7) for the product currently produced in the production plant (2) and/or for products to be produced in the future, wherein the prediction model (7) determines a probability that one or more target criteria of the product currently produced in the production plant (2) and/or products to be produced in the future lie within a defined region, wherein the detected data of the plurality of plant parts (3) are taken into consideration when generating the at least one prediction model (7),
determining an optimised production process within the production plant (2) on the basis of the detected data with respect to the products to be produced in the production plant (2), monitoring the production process within the plant parts (3), the at least one generated prediction model (7) and technical production parameters of the individual plant parts (3), generating and executing target setpoints for the control and/or regulation of the processes within the plant parts (3) on the basis of the optimised production process.

12. Method according to claim 11, wherein monitoring of the production process within the production plant (2), particularly within the plant parts (3), is carried out by means of sensors (10), the monitoring or the production process within the production plant (2), particularly within the plant parts (3), preferably being carried out continuously.

13. Method according to claim 11 or claim 12, further comprising the step of storing data in a central data memory (14), particularly data with respect to detection of data about the products to be produced in the production plant (2), particularly with target criteria for the products to be produced, data with respect monitoring of the production process within the production plant (2), particularly within the plant parts (3), data with respect to generation of the at least one prediction model (7) for the product currently produced in the production plant (2) and/or for products to be produced in the future, particularly with respect to maintenance of the target criteria for the products to be produced currently or in the future, data with respect to determination of an optimised production process within the production plant (2) on the basis of the detected data about the products to be produced in the production plant (2), monitoring of the production process within the production plant (2), particularly within the plant parts (3), of the at least one generated prediction model (7) and technical production parameters of the production plant (2), particularly technical production parameters of the individual plant parts (3), and/or data with respect to generation and execution of target presets for the control and/or regulation of the production process within the production plant (2), particularly control and/or regulation of the process within the plant parts (3).

14. Method according to any one of claims 11 to 13, wherein generation of the at least one prediction model (7) is based on statistical methods, methods of machine learning, methods of artificial intelligence or the like.

15. Method according to any one of claims 11 to 14, comprising the step of generating a plurality of mutually different prediction models (7), wherein the different prediction models (7) differ with respect to, for example, methods of creation, original data and/or learning algorithms.

16. Method according to claim 15, wherein determination of the optimised production process within the production plant (2) takes into consideration the prediction model (7) which delivers the currently best prediction or the product currently produced in the production plant (2) and/or for products to be produced in the future, particularly with consideration of one or more target criteria.

17. Method according to any one of claims 11 to 16, wherein an evaluation is carried out with respect to one or more target criteria when determining the optimised production process within the production plant (2).

18. Method according to any one of claims 11 to 17, wherein determination of the optimised production process within the production plant (2) checks the effects of target value changes on the target specifications of the product currently produced in the production plant (2) and/or the product to be produced in the future.

19. Method according to any one of claims 11 to 18, wherein determination of the optimised production process within the production plant (2) takes into consideration data with respect to possible target value changes of the production plant (2), particularly of the individual plant parts (3), particularly target value changes which can be realised by the production plant (2), particularly the individual plant parts (3), such as maximum rates of change of actuator activity and/or dependencies of a settable variable on other equally settable variables.

## Revendications

1. Système (1) pour la commande d'une installation de production (2) composée de plusieurs parties d'installation (3), en particulier d'une installation de production (2) pour la production de biens industriels tels que des produits semi-finis métalliques, comprenant :
l'installation de production (2) composée de plusieurs parties d'installation (3),
respectivement une automatisation d'installation (4) pour la surveillance et la commande et/ou la régulation du processus à l'intérieur des parties d'installation (3), les automatisations d'installation (4) des multiples parties d'installation (3) étant indépendantes les unes des autres et aucun échange d'informations n'ayant lieu entre les automatisations d'installation (4) des multiples parties d'installation (3),
un système de planification de production (5) avec des informations sur les produits à fabriquer dans l'installation de production (2), les informations comprenant des critères cibles pour les produits à fabriquer,
un générateur de modèles (6) pour la génération d'au moins un modèle prédictif (7) pour le produit actuellement fabriqué dans l'installation de production (2) et/ou pour les produits à fabriquer ultérieurement conformément au système de planification de production (5),
le modèle prédictif (7) étant configuré pour déterminer une probabilité qu'un ou plusieurs critères cibles du produit actuellement fabriqué dans l'installation de production (2) et/ou de produits à fabriquer ultérieurement se situent dans une plage définie,
le générateur de modèles (6) étant configuré pour prendre en compte les résultats de la surveillance des multiples parties d'installation (3) lors de la génération de l'au moins un modèle prédictif (7),
un optimiseur de production (8), configuré pour la détermination d'un processus de production optimisé à l'intérieur de l'installation de production (2) sur la base des données des automatisations d'installation (4), du système de planification de production (5) et du modèle prédictif (7) généré par le générateur de modèles (6),
l'optimiseur de production (8) étant configuré pour prendre en compte les spécifications techniques de production des différentes parties d'installation (3) lors de la détermination du processus de production optimisé à l'intérieur de l'installation de production (2), et
une commande d'installation de production (9), configurée pour la génération de valeurs de consigne pour les automatisations d'installation (4) sur la base du processus de production optimisé déterminé par l'optimiseur de production (8).

2. Système (1) selon la revendication 1,
dans lequel les multiples parties d'installation (3) comprennent respectivement des capteurs (10), pour la saisie de caractéristiques de produit, de paramètres de processus et/ou d'états de fonctionnement à l'intérieur de la partie d'installation (3).

3. Système (1) selon la revendication 1 ou la revendication 2,
comprenant en outre une mémoire de données centrale (14) pour les différents composants du système (1), les différents composants du système (1) pouvant accéder aux données et en particulier pouvant adapter des données.

4. Système (1) selon l'une des revendications 1 à 3,
dans lequel des critères cibles sont sélectionnés parmi : épaisseur, largeur, longueur, poids, résistance à la traction, limite d'élasticité, module d'Young, allongement à la rupture, résistance à la corrosion, présence ou nombre de défauts de surface de différents types, nombre de fissures à la surface ou à l'intérieur du matériau, résultats DWTT, résultats Charpy, températures de transition de la rupture ductile à la rupture fragile, épaisseur de la couche de zinc, épaisseur de paroi de tube, excentricité, hauteur d'âme, hauteur d'aile, épaisseur d'aile, profil, planéité et similaires.

5. Système (1) selon l'une des revendications 1 à 4,
dans lequel le générateur de modèles (6) est configuré pour générer plusieurs modèles prédictifs (7) différents les uns des autres, les différents modèles prédictifs (7) se distinguant par exemple en ce qui concerne la méthode de création, les données d'origine et/ou les algorithmes d'apprentissage.

6. Système (1) selon la revendication 5,
dans lequel l'optimiseur de production (8) est configuré pour prendre en compte le modèle prédictif (7) qui fournit la meilleure prédiction actuelle pour le produit actuellement fabriqué dans l'installation de production (2) et/ou pour les produits à fabriquer ultérieurement conformément au système de planification de production (5), en particulier en tenant compte d'un ou de plusieurs critères cibles.

7. Système (1) selon l'une des revendications 1 à 6,
dans lequel l'optimiseur de production (8) est configuré pour exécuter une évaluation relative à un ou plusieurs critères cibles lors de la détermination du processus de production optimisé à l'intérieur de l'installation de production (2).

8. Système (1) selon l'une des revendications 1 à 7,
dans lequel l'optimiseur de production (8) est configuré pour déterminer les effets de modifications de valeurs de consigne sur les objectifs cibles du produit actuellement fabriqué dans l'installation de production (2) et/ou du produit à fabriquer ultérieurement conformément au système de planification de production (5).

9. Système (1) selon la revendication 8,
dans lequel l'optimiseur de production (8) comprend des informations sur des modifications de valeurs de consigne possibles de l'installation de production (2), en particulier des différentes parties d'installation (3), en particulier des modifications de valeurs de consigne réalisables par l'installation de production (2), en particulier par les différentes parties d'installation (3), telles que des vitesses de modification maximales de l'activité des actionneurs et/ou des dépendances d'une grandeur réglable par rapport à d'autres grandeurs également réglables.

10. Système (1) selon l'une des revendications 1 à 9,
dans lequel l'optimiseur de production (8) est configuré pour optimiser le processus de production à l'intérieur de l'installation de production (2) pour une pluralité de sections de produit.

11. Procédé pour la commande d'une installation de production (2) composée de plusieurs parties d'installation (3), en particulier d'une installation de production (2) pour la production de biens industriels tels que des produits semi-finis métalliques, comprenant les étapes consistant à :
saisir des informations sur les produits à fabriquer dans l'installation de production (2), les informations comprenant des critères cibles pour les produits à fabriquer,
surveiller le processus de production à l'intérieur des parties d'installation (3), les automatisations d'installation (4) des multiples parties d'installation (3) étant indépendantes les unes des autres et aucun échange d'informations n'ayant lieu entre les automatisations d'installation (4) des multiples parties d'installation (3),
générer au moins un modèle prédictif (7) pour le produit actuellement fabriqué dans l'installation de production (2) et/ou pour les produits à fabriquer ultérieurement,
le modèle prédictif (7) déterminant une probabilité qu'un ou plusieurs critères cibles du produit actuellement fabriqué dans l'installation de production (2) et/ou de produits à fabriquer ultérieurement se situent dans une plage définie,
les informations saisies des multiples parties d'installation (3) étant prises en compte lors de la génération de l'au moins un modèle prédictif (7),
déterminer un processus de production optimisé à l'intérieur de l'installation de production (2) sur la base des informations saisies sur les produits à fabriquer dans l'installation de production (2), de la surveillance du processus de production à l'intérieur des parties d'installation (3), de l'au moins un modèle prédictif (7) généré et de paramètres techniques de production des différentes parties d'installation (3),
générer et exécuter des valeurs de consigne pour la commande et/ou la régulation des processus à l'intérieur des parties d'installation (3) sur la base du processus de production optimisé.

12. Procédé selon la revendication 11,
dans lequel la surveillance du processus de production à l'intérieur de l'installation de production (2), en particulier à l'intérieur des parties d'installation (3), s'effectue au moyen de capteurs (10), de préférence la surveillance du processus de production à l'intérieur de l'installation de production (2), en particulier à l'intérieur des parties d'installation (3), s'effectue en continu.

13. Procédé selon la revendication 11 ou la revendication 12,
comprenant en outre l'étape de stockage de données dans une mémoire de données centrale (14), en particulier
des données concernant la saisie d'informations sur les produits à fabriquer dans l'installation de production (2), en particulier avec des critères cibles pour les produits à fabriquer,
des données concernant la surveillance du processus de production à l'intérieur de l'installation de production (2), en particulier à l'intérieur des parties d'installation (3),
des données concernant la génération d'au moins un modèle prédictif (7) pour le produit actuellement fabriqué dans l'installation de production (2) et/ou pour les produits à fabriquer ultérieurement, en particulier en ce qui concerne le respect des critères cibles pour les produits actuellement ou ultérieurement fabriqués,
des données concernant la détermination d'un processus de production optimisé à l'intérieur de l'installation de production (2) sur la base des informations saisies sur les produits à fabriquer dans l'installation de production (2), de la surveillance du processus de production à l'intérieur de l'installation de production (2), en particulier à l'intérieur des parties d'installation (3), de l'au moins un modèle prédictif (7) généré et de paramètres techniques de production de l'installation de production (2), en particulier de paramètres techniques de production des différentes parties d'installation (3), et/ou
des données concernant la génération et l'exécution de valeurs de consigne pour la commande et/ou la régulation du processus de production à l'intérieur de l'installation de production (2), en particulier la commande et/ou la régulation des processus à l'intérieur des parties d'installation (3).

14. Procédé selon l'une des revendications 11 à 13,
dans lequel la génération de l'au moins un modèle prédictif (7) est basée sur des méthodes de la statistique, de l'apprentissage automatique, de l'intelligence artificielle ou similaires.

15. Procédé selon l'une des revendications 11 à 14,
comprenant l'étape de génération de plusieurs modèles prédictifs (7) différents les uns des autres, les différents modèles prédictifs (7) se distinguant par exemple en ce qui concerne la méthode de création, les données d'origine et/ou les algorithmes d'apprentissage.

16. Procédé selon la revendication 15,
dans lequel la détermination du processus de production optimisé à l'intérieur de l'installation de production (2) prend en compte le modèle prédictif (7) qui fournit la meilleure prédiction actuelle pour le produit actuellement fabriqué dans l'installation de production (2) et/ou pour les produits à fabriquer ultérieurement, en particulier en tenant compte d'un ou de plusieurs critères cibles.

17. Procédé selon l'une des revendications 11 à 16,
dans lequel, lors de la détermination du processus de production optimisé à l'intérieur de l'installation de production (2), une évaluation relative à un ou plusieurs critères cibles a lieu.

18. Procédé selon l'une des revendications 11 à 17,
dans lequel la détermination du processus de production optimisé à l'intérieur de l'installation de production (2) vérifie les effets de modifications de valeurs de consigne sur les objectifs cibles du produit actuellement fabriqué dans l'installation de production (2) et/ou du produit à fabriquer ultérieurement.

19. Procédé selon l'une des revendications 11 à 18,
dans lequel la détermination du processus de production optimisé à l'intérieur de l'installation de production (2) prend en compte des informations sur des modifications de valeurs de consigne possibles de l'installation de production (2), en particulier des différentes parties d'installation (3), en particulier des modifications de valeurs de consigne réalisables par l'installation de production (2), en particulier par les différentes parties d'installation (3), telles que des vitesses de modification maximales de l'activité des actionneurs et/ou des dépendances d'une grandeur réglable par rapport à d'autres grandeurs également réglables.
